(19) Europäisches Patentamt
European Patent Office
Office européen des brevets

(11) **EP 3 724 620 B1**

(12) **EUROPEAN PATENT SPECIFICATION**

(45) Date of publication and mention
of the grant of the patent:
**28.02.2024 Bulletin 2024/09**

(21) Application number: **18842705.8**

(22) Date of filing: **12.12.2018**

(51) International Patent Classification (IPC):
*G01J 5/00* *(2022.01)*    *G01J 3/02* *(2006.01)*
*G01J 3/26* *(2006.01)*    *G02B 27/09* *(2006.01)*
*G01J 3/12* *(2006.01)*

(52) Cooperative Patent Classification (CPC):
**G01J 3/26; G01J 3/021; G01J 5/0014;
G02B 27/0983;** G01J 2003/1234; G01J 2003/1282

(86) International application number:
**PCT/EP2018/084510**

(87) International publication number:
**WO 2019/115595 (20.06.2019 Gazette 2019/25)**

(54) **SPECTROMETER DEVICE AND SYSTEM**

SPEKTROMETERVORRICHTUNG UND -SYSTEM

DISPOSITIF ET SYSTÈME SPECTROMÉTRIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2017 EP 17206926**

(43) Date of publication of application:
**21.10.2020 Bulletin 2020/43**

(73) Proprietor: **trinamiX GmbH
67063 Ludwigshafen am Rhein (DE)**

(72) Inventors:
• **VALOUCH, Sebastian
67063 Ludwigshafen am Rhein (DE)**
• **GUST, Robert
67063 Ludwigshafen am Rhein (DE)**
• **FEUERSTEIN, Bertram
67063 Ludwigshafen am Rhein (DE)**

• **SEND, Robert
67063 Ludwigshafen am Rhein (DE)**
• **BRUDER, Ingmar
67063 Ludwigshafen am Rhein (DE)**

(74) Representative: **BASF IP Association
BASF SE
GBI-C006
67056 Ludwigshafen (DE)**

(56) References cited:
**US-A- 5 615 673       US-A1- 2014 131 578
US-A1- 2016 151 009    US-A1- 2017 205 346**

• **W. T. Welford: "Chapter 11. Illumination of Optical
Systems and Instruments" In: "High Collection
Nonimaging Optics", 1 December 1989
(1989-12-01), Elsevier Science & Technology, US,
XP055591600, ISBN: 978-0-12-742885-7 pages
201-222, page 204 - page 209**

**Description**

Field of the invention

The invention relates to a spectrometer device to a spectrometer system comprising the spectrometer device, and to various uses of the spectrometer device and the spectrometer system. Such devices and systems can, in general, be employed for investigation or monitoring purposes, in particular, in the infrared (IR) spectral region, especially in the near-infrared (NIR) and the mid infrared (MidIR) spectral regions, and for a detection of heat, flames, fire, or smoke. However, further kinds of applications are possible.

Prior art

Various spectrometer devices and systems for investigations in the infrared (IR) spectral region, especially in the near-infrared (NIR) spectral region, are known. Especially, spectrometer devices which comprise a combination of a linearly variable filter (LVF) and a detector array have already been proposed. Herein, the LVF is designated for separating light captured from an object into a spectrum of constituent wavelength signals while the detector array includes a plurality of pixels, wherein each of the plurality of pixels is disposed to receive at least a portion of a plurality of the constituent wavelength signals that provides a power reading for each constituent wavelength. Typically, in order to accomplish that the incident light may impinge the LVF in a manner normal to a receiving surface of the LVF, a baffle is used for this purpose, which, however, generally results in a low light throughput and a poor signal-to-noise ratio.

US 2014/131578 A1 discloses a portable spectrometer device which includes an illumination source for directing at a sample as well as a tapered light pipe (TLP) for capturing the light which interacts with the sample at a first focal ratio and for delivering the light at a second focal ratio lower than the first focal ratio to the LVF. Preferably, the TLP is lensed at one end, and recessed in a protective boot with stepped inner walls. In addition, a gap between the TLP and LVF is minimized to further enhance resolution and robustness. It is emphasized here, that the TLP disclosed herein can also be denoted by the term "optical concentrator device", wherein the optical concentrator device is operated in reverse direction for spreading out the captured light and reducing an angular spread of the captured light.

However, as, for example, described by S. Madala and R.F. Boehm, Effect of reflection losses on stationary dielectric-filled non-imaging concentrators, J. Photonics for Energy 6(4), 047002, 2016, optical concentrator devices comprising a conical shape suffer from a low concentration efficiency. As further described by S. Madala et al., effects of Fresnel reflection and total internal reflection (TIR) losses on performance parameters in refractive-type non-imaging solar concentrators affect performance parameters and, thereby, energy collection. For this purpose, S. Madala et al. carried out a raytracing analysis in order to illustrate the effects of Fresnel reflection and TIR losses on four different types of stationary dielectric-filled non-imaging concentrators, including a conic concentrator (V-trough concentrator), a compound parabolic concentrator (CPC), a compound elliptical concentrator (CEC), and a compound hyperbolic concentrator (CHC). According to their findings, the refractive index (RI) of a dielectric fill material determines the acceptance angle of a solid non-imaging concentrator. Larger refractive indices yield larger acceptance angles and, thereby, larger energy collection, however, they also increase the Fresnel reflection losses.

Lun J. and R. Winston, Asymmetric design for compound elliptical concentrators (CEC) and its geometric flux implications, Proc. of SPIE, 9572, 2015, provide a theoretical treatise on asymmetric compound elliptical concentrators (CEC) as a further non-imaging optical element. Herein, they set out that a conventional way of understanding an ideal concentrator is based on maximizing the concentration ratio based on a uniformed acceptance angle. Although such an angle does not exist in the case of a CEC, the thermodynamic laws still hold and concentrators have been contemplated with a maximum concentration ratio allowed by them by using a string method to solve this general problem. As a result, groups of ideal concentrators using geometric flux field or a flowline method have been obtained.

US 5,615,673 A discloses a compound parabolic concentrator (CPC) which is used for optically collecting Raman scattered light returning from a region of interest. Herein, the CPC is a non-imaging optical element used in a normal configuration to convert light radiated over a full hemisphere into a narrow cone which can be collected by conventional optics, including optical fibers and lenses.

US 2016/151009 A1 discloses a sensor for a detection of gas, in particular for detection of $CO_2$, wherein a numerical aperture converter (NA converter) is arranged in a path between a wavelength filter and a radiation source. Herein, the NA converter is created as an opening in a reflective or opaque material with the shape of a compound parabolic concentrator or a compound elliptical concentrator. Alternatively, an NA filter can be used which corresponds to an NA converter, except that the NA filter confines the angular spread of the rays by absorption of high-angle rays instead of by conversion.

Problem addressed by the invention

Therefore, the problem addressed by the present invention is that of providing a spectrometer device and a spectrometer system which may, particularly, be suited for investigations in the infrared (IR) spectral region, especially in the near-infrared (NIR) spectral region, and which at least substantially avoid the disadvantages of known devices and systems of this type.

In particular, it would be desirous to have an improved simple, cost-efficient and, still, reliable spectrometer device having an optical element designed for capturing light from an object and transferring the captured light to a linearly variable filter with a higher concentration efficiency as currently available.

Summary of the invention

This problem is solved by the invention with the features of the independent patent claims. Advantageous developments of the invention, which can be implemented individually or in combination, are presented in the dependent claims and/or in the following specification and the detailed embodiments.

As used herein, the expressions "have", "comprise" and "contain" as well as grammatical variations thereof are used in a non-exclusive way. Thus, the expression "A has B" as well as the expression "A comprises B" or "A contains B" may both refer to the fact that, besides B, A contains one or more further components and/or constituents, and to the case in which, besides B, no other components, constituents or elements are present in A.

In a first aspect of the present invention, a spectrometer device is disclosed. Accordingly, the spectrometer device comprises

- an optical element designed for receiving incident light from an object and transferring the incident light to a length variable filter, wherein the optical element comprises an optical concentrator device, wherein the optical concentrator device is operated in reverse direction, wherein the optical concentrator device has a single sidewall which is adapted for reflecting incident light, wherein the single sidewall is designed as a rounded sidewall;
- the length variable filter which is designated for separating the incident light into a spectrum of constituent wavelength signals; and
- a detector array comprising a plurality of pixelated sensors, wherein each of the pixelated sensors is adapted to receive at least a portion of one of the constituent wavelength signals, wherein each of the constituent wavelength signals is related to an intensity of each constituent wavelength.

The "object" may, generally, be an arbitrary body, chosen from a living object and a non-living object. Thus, as an example, the at least one object may comprise one or more articles and/or one or more parts of an article, wherein the at least one article or the at least one part thereof may comprise at least one component which may provide a spectrum suitable for investigations. Additionally or alternatively, the object may be or may comprise one or more living beings and/or one or more parts thereof, such as one or more body parts of a human being, e.g. a user, and/or an animal.

As used herein, the term "light", generally, refers to a partition of electromagnetic radiation which is, usually, referred to as "optical spectral range" and which comprises one or more of the visible spectral range, the ultraviolet spectral range and the infrared spectral range. Herein, the term "ultraviolet spectral range", generally, refers to electromagnetic radiation having a wavelength of 1 nm to 380 nm, preferably of 100 nm to 380 nm. Further, in partial accordance with standard ISO-21348 in a valid version at the date of this document, the term "visible spectral range", generally, refers to a spectral range of 380 nm to 760 nm. The term "infrared spectral range" (IR) generally refers to electromagnetic radiation of 760 nm to 1000 $\mu$m, wherein the range of 760 nm to 1.5 $\mu$m is usually denominated as "near infrared spectral range" (NIR) while the range from 1.5 $\mu$ to 15 $\mu$m is denoted as "mid infrared spectral range" (MidIR) and the range from 15 $\mu$m to 1000 $\mu$m as "far infrared spectral range" (FIR). Preferably, light used for the typical purposes of the present invention is light in the infrared (IR) spectral range, more preferred, in the near infrared (NIR) and the mid infrared spectral range (MidIR), especially the light having a wavelength of 1 $\mu$m to 5 $\mu$m, preferably of 1 $\mu$m to 3 $\mu$m.

Light emerging from the object can originate in the object itself, but can also optionally have a different origin and propagate from this origin to the object and subsequently toward the spectrometer device. The latter case can, in particular, be affected by at least one illumination source being used. Thus, the light propagating from the object to the spectrometer device may be light which may be reflected by the object and/or a reflection device connected to the object. Alternatively or in addition, the light may at least partially transmit through the object.

The illumination source can be embodied in various ways. Thus, the illumination source can be for example part of the spectrometer device in a housing. Alternatively or additionally, however, the at least one illumination source can also be arranged outside a housing, for example as a separate light source. The illumination source can be arranged separately from the object and illuminate the object from a distance. As indicated above, the illumination source can, alternatively or in addition, also be connected to the object or be part of the object, such that, by way of example, the electromagnetic radiation emerging from the object can also be generated directly by the illumination source. By way of example, at least one illumination source can be arranged on and/or in the object and directly generate the electromagnetic radiation.

The illumination source may, preferably, comprise a kind of illumination source which may be known to provide sufficient emission in the infrared (IR) spectral range, especially, in the near infrared (NIR) spectral range, in particular, an incandescent lamp. Alternatively or in addition, the illumination source may, be selected from at least one of the following illumination sources: a flame source; a heat source; a laser, in particular a laser diode, although further types of lasers can also be used; a light emitting diode; an organic light source, in particular an organic light emitting diode; a neon light; a structured light source. Alternatively or additionally, other illumination sources can be used. Herein, it may particularly be preferred when the light emitted by the object and/or by the illumination source may exhibit a spectral range which may be closely related to the spectral sensitivities of the detector array, particularly, in a manner to ensure that the detector array which may be illuminated by the respective illumination source may be capable of providing a detector signal having a high intensity, thus, enabling an evaluation of the detector signals with sufficient signal-to-noise-ratio and, concurrently, a high-resolution.

As generally used, the term "spectrum" refers to a partition of the optical spectral range, in particular, of the infrared (IR) spectral range, especially of the near-infrared (NIR) spectral range. Herein, each part of the spectrum is constituted by an optical signal which is defined by a signal wavelength and the corresponding signal intensity. Further, the term "spectrometer device" relates to an apparatus which is capable of recording the signal intensity with respect to the corresponding wavelength of a spectrum or a partition thereof, such as a wavelength interval, wherein the signal intensity may, preferably, be provided as an electrical signal which may be used for further evaluation. In the spectrometer device according to the present invention, a length variable filter is used for separating incident light into a spectrum of constituent wavelength signals whose respective intensities are determined by employing a detector array as described below in more detail. In addition, an optical element which is designed for receiving incident light from the object and transferring the incident light to the length variable filter is applied. As further used herein, a "spectrometer system" may, thus, refer to an apparatus which, in addition to the spectrometer device, comprises an evaluation unit which is designated for determining information related to a spectrum of an object by evaluating detector signals provided by the spectrometer device as disclosed herein.

Thus, according to the present invention, the spectrometer device comprises a length variable filter which is designated for separating the incident light into a spectrum of constituent wavelength signals. As generally used, the term "length variable filter" refers to an optical filter which comprises a plurality of interference filters, which are provided in a continuous arrangement of the filters. Herein, each of the filters may form a bandpass with a variable center wavelength for each spatial position on the filter, preferably continuously, along a single dimension, which is, usually, denoted by the term "length", on a receiving surface of the length variable filter. In a preferred example, the variable center wavelength may be a linear function of the spatial position on the filter, in which case the length variable filter is usually referred to as a "linearly variable filter" or by its abbreviation "LVF". However, other kinds of functions may be applicable to the relationship between the variable center wavelength and the spatial position on the filter. Herein, the filters may be located on a transparent substrate which may, in particular, comprise at least one material that may show a high degree of optical transparency within in the infrared (IR) spectral range, especially, within the near-infrared (NIR) spectral range as described below in more detail, whereby varying spectral properties, especially continuously varying spectral properties, of the filter along length of the filter may be achieved. In particular, the length variable filter may be a wedge filter that may be adapted to carry at least one response coating on a transparent substrate, wherein the response coating may exhibit a spatially variable property, in particular, a spatially variable thickness. However, other kinds of length variable filters which may comprise other materials or which may exhibit a further spatially variable property may also be feasible. At a normal angle of incidence of an incident light beam, each of the filters as comprised by the length variable filter may have a bandpass width that may amount to a fraction of the center wavelength, typically to a few percent, of the particular filter. By way of example, for a length variable filter having a wavelength range from 1400 to 1700 nm and a bandpass width of 1 %, the bandpass width at the normal incidence angle might vary from 14 nm to 17 nm. However, other examples may also be feasible.

As a result of this particular set-up of the length variable filter, only incident light having a wavelength which may, within a tolerance indicated by the bandpass width, equal the center wavelength being assigned to a particular spatial position on the filter is able to pass through the length variable filter at the particular spatial position. Thus, a "transmitting wavelength" which may be equal to the center wavelength $\pm$ ½ of the bandpass width may be defined for each spatial position on the length variable filter. In other words, all light which may not pass through the length variable filter at the transmitting wavelength may be absorbed or, mostly, reflected by the receiving surface of the length variable filter. As a result, the length variable filter has a varying transmittance which may enable it for separating the incident light into a spectrum.

Thus, the light which may pass through the length variable filter at a particular spatial position on the length variable filter may, subsequently, impinge on a detector array. In other words, the detector array may, preferably, be placed in a manner that the light may first impinge on the length variable filter and only that the partition of the light which may pass through the particular spatial position on the length variable filter may, thereafter, be capable of impinging on a corresponding spatial position on the detector array. As a result, the length variable filter may, therefore, be used for separating the incident light by its associated wavelength or wavelengths into at least one corresponding spatial position while a particular optical sensor comprised by the detector array may, consequently, be employed for measuring an intensity of the incident light which, due to its particular wavelength, may be able to pass through the length variable filter at the corresponding spatial position and, therefore, impinge the particular optical sensors provided for determining the intensity of the incident light at the particular wavelength. In a particularly preferred embodiment, the detector array may, thus, comprise a sequence of optical sensor which may be located in form of a series of optical sensors one following the other, wherein the sequence of the optical sensors may be placed in a parallel manner with respect to the continuous arrangement of the interference filters along the length of the length variable filter.

In further preferred embodiment, the detector array may, preferably, be separated from the length variable filter by a transparent gap. Herein, the transparent gap may, by way of example, be obtained by using an extended transparent body having two opposing sides, wherein the plurality of the interference filters which may constitute the length variable filter may be disposed on a first side while the series of the optical sensors constituting the detector array may be placed on a second side opposing the first side. As a result, by selecting a suitable width for the transparent gap a more precise adjustment of the detector array with regard to the length variable filter can be achieved.

The detector array may, thus, comprise a series of optical sensors which may, preferably, be arranged in a single line as a one-dimensional matrix along the length of the length variable filter or in more than one line, especially as two, three, or four lines parallel lines, in form of a two-dimensional matrix, in particular, in order to receive most of the intensity of the incident light as possible. Thus, a number N of pixels in one direction may be higher compared to a number M of pixels in a further direction such that the one-dimensional 1 x N matrix or a rectangular two-dimensional M x N matrix may be obtained, wherein $M < 10$ and $N \geq 10$, preferably $N \geq 20$, more preferred $N \geq 50$. In addition, the matrixes used herein may also be placed in a staggered arrangement. Herein, each of the optical sensors as used therein may have the same or, within a tolerance level, a similar optical sensitivity, especially for ease of manufacturing the series of the optical sensors. Alternatively, each of the optical sensors as used in the series of the optical sensors may exhibit a varying optical sensitivity that may vary in accordance with the varying transmittance properties of the length variable filter, such as by providing an increasing variation or a decreasing variation of the optical sensitivity with wavelength along the series of the optical sensors. However, other kinds of arrangements may also be feasible.

In particular, in order to achieve a high resolution of the spectrometer device, each of the optical sensors may, thus, be adapted to receive incident light only over a small spatial angle. This arrangement, particularly, reflects the setup of the length variable filter which is designed to generate the desired spectrum depending on the spatial position of the impingement of the incident light along the length of the filter. This particular arrangement is, according to the present invention, achieved by a detector array which, thus, comprises a plurality of pixelated sensors, wherein each of the pixelated sensors is adapted to receive at least a portion of one of the constituent wavelength signals as provided by the length variable filter. As indicated above, each of the constituent wavelength signals is, hereby, related to an intensity of each of the constituent wavelengths. As generally used, the terms "pixelated optical sensor" or, simply, "pixelated sensor" refers to an optical sensor which comprises an array of individual pixel sensors, wherein each of the individual pixel sensors has at least a photosensitive area which is adapted for generating an electrical signal depending on the intensity of the incident light, wherein the electrical signal may, in particular, be provided to an external evaluation unit for further evaluation. Herein, the photosensitive area as comprised by each of the individual pixel sensors may, especially, be a single, uniform photosensitive area which is configured for receiving the incident light which impinges on the individual pixel sensor. However, other arrangements of the pixelated sensors may also be conceivable.

The pixelated sensor is designed to generate signals, preferably electronic signals, associated with the intensity of the incident light which impinges on the individual pixelated sensor. The signal may be an analogue and/or a digital signal. The electronic signals for adjacent pixelated sensors can, accordingly, be generated simultaneously or else in a temporally successive manner. By way of example, during a row scan or line scan, it is possible to generate a sequence of electronic signals which correspond to the series of the individual pixel sensors which are arranged in a line. In addition, the individual pixel sensors may, preferably, be active pixel sensors which may be adapted to amplify the electronic signals prior to providing it to the external evaluation unit. For this purpose, the pixelated sensor may comprise one or more signal processing devices, such as one or more filters and/or analogue-digital-converters for processing and/or preprocessing the electronic signals.

The pixelated sensor may be selected from any known pixel sensor, in particular, from a pixelated organic camera element, preferably, a pixelated organic camera chip, or from a pixelated inorganic camera element, preferably, a pixelated inorganic camera chip, more preferably from a CCD chip or a CMOS chip, which are, commonly, used in various cameras nowadays. As an alternative, the pixelated sensor may be or comprise a photoconductor, in particular an inorganic photoconductor, especially PbS, PbSe, Ge, InGaAs, ext. InGaAs, InSb, or HgCdTe. As a further alternative it may comprise of pyroelectric, bolometer or thermopile detector elements. Thus, a camera chip having a matrix of 1 x N pixels or of M x N pixels may be used here, wherein M < 10 and N ≥ 10, preferably N ≥ 20, more preferred N ≥ 50. Further, a mono-chrome camera element, preferably a monochrome camera chip, may be used, wherein the monochrome camera element may be differently selected for each pixel sensor, especially, in accordance with the varying wavelength along the series of the optical sensors.

As a further alternative, the pixelated sensor may be based on a FiP sensor which is, among further documents, disclosed in WO 2012/110924 A1, WO 2014/ 097181 A1, or WO 2016/ 120392 A1. Herein, the term "FiP sensor" refers to a sensor in which the sensor signal, given the same total power of the illumination, is, according to the so called "FiP effect", dependent on a geometry of the illumination of the photosensitive area, in particular on a beam cross-section of the illumination on the photosensitive area, also denoted as a "spot size". As a result, the observable property that an electrical property of the photosensitive area depends on an extent of the illumination of the photosensitive area by incident light particularly accomplishes that two incident light beams comprising the same total power but generating different spot sizes on the photosensitive area provide different values for the electrical property of the photosensitive area and are, thus, distinguishable with respect to each other. Preferably, the photosensitive area of each of the FiP sensors may comprise a photoconductive material, especially selected from PbS, PbSe, or HgCdTe, or a solid dye sensitized solar cell (sDSC). Further, WO 2014/198625 A1 discloses a particular embodiment of a detector array which employs a M x N matrix of FiP sensors. Alternatively, further kinds of pixelated sensors may also be feasible.

Thus, the detector array may be adapted to provide a plurality of the electrical signals which may be generated by the photosensitive areas of the pixelated sensors comprised by the detector array. The electrical signals as provided by the detector array of the spectrometer device may, subsequently, be forwarded to an external evaluation unit, in particular, to an evaluation unit which may be comprised by a corresponding spectrometer system as described below in more detail. Herein, the term "evaluation unit" refers to an apparatus being designated for determining information related to the spectrum of the object of which a spectrum has been recorded, in particular, by using the spectrometer device as described herein, wherein the information is obtainable by evaluating the detector signals as provided by the detector array of the spectrometer device. The information may, for example, be provided electronically, visually, acoustically or in any arbitrary combination thereof. Further, the information may be stored in a data storage device of the spectrometer device, preferably of the spectrometer system, or of a separate storage device and/or may be provided via at least one interface, such as a wireless interface and/or a wire-bound interface.

According to the present invention, the spectrometer device further comprises an optical element which is designated for receiving incident light from the object and, simultaneously, transferring the incident light to the length variable filter, wherein the optical element comprises an optical concentrator device which is operated in reverse direction. As generally used, the term "optical concentrator" refers to a non-imaging optical element having an input, also denoted as "entrance pupil" or an "entrance aperture", an output located oppositely to the input, wherein the output may also be denoted by one of the terms "exit pupil" or "exit aperture", and an optically guiding structure located between the input and the output, wherein the optical concentrator is, in normal direction of operation, adapted for capturing light at the input at a large angular spread, concentrating the captured light within the optically guiding structure, and emitting the concentrated light at the output. By way of example, the optical concentrator may, therefore, be used in concentrated photovoltaics in order to allow high solar concentration under large possible entrance angles.

In contrast hereto, in the optical concentrator device which is used in reverse direction the previous output of the optical concentrator now serves as input for receiving incident light, while the optically guiding structure in the reverse direction, preferably, serves for spreading out the incident light, whereas the previous input now serves as output for emitting the spread light. In a preferred embodiment of the present invention the entrance pupil of the inversely-operated optical concentrator device, preferably, comprises an input angle of less than 90°, more preferably of less than 70°, in particular of less than 50°. Further in this preferred embodiment, the exit pupil of the inversely-operated optical concentrator device, preferably, comprises an output angle of not more than 30°, more preferably of not more than 15°, in particular of not more than 10°. Hereby, an angular spread of emitted light beams at the output can, simultaneously, be reduced compared to the incident light. As a result, applying the optical concentrator device in reverse direction allows capturing incident light which is emitted or reflected by the object or passes through the object in a manner that light which is emitted at the output of the inversely-operated optical concentrator device exhibits a diminished angular spread, wherein the diminished angular spread may, preferably, be restricted to an angular range of at most ± 20°, preferably of at most ± 10°, most preferred of at most ± 5°.

Consequently, the optical concentrator device operated in reverse direction may, thus, be selected and arranged in a fashion that the emitted light beams can impinge on the length variable filter within the restricted angular range and, thus, predominantly in a direction normal to the receiving surface of the length variable filter, i.e. in a perpendicular manner with respect to the receiving surface of the length variable filter. As already indicated above, each of the interference filters as comprised by the length variable filter may, at such a normal angle of light incidence, have a bandpass width which may only amount to a fraction of the center wavelength of the particular interference filter. As a result, incident light may enter the length variable filter with considerably higher concentration efficiency.

Further according to the present invention, the inversely-operated optical concentrator device comprises a single sidewall which is adapted for reflecting incident light. This feature, which may, specifically, may allow increasing the efficiency of the spectrometer device, is in particular contrast to known inversely-operated optical concentrator devices which use non-reflective, absorbable surfaces in order to avoid under all possible circumstances that light beams may reach the length variable filter at a spatial position on the length variable filter which may not be configured for receiving the light beam having the particular wavelength as comprised by the light beam. In contrast hereto, as a result of this further preferred embodiment, the inversely-operated optical concentrator device may allow some light beams to be reflected and, still, be guided to the length variable filter.

Further according to the present invention, the single sidewall comprised by the inversely-operated optical concentrator device is designed as a rounded sidewall. Herein, the single rounded sidewall is formed as a shell surface which is adapted to connect the entrance aperture at the entrance pupil and the exit aperture at the exit pupil as the optically guiding structure. As a result, the single rounded sidewall assumes a shape in three-dimensional space, wherein the shape is devoid of any corners. More particular, the rounded sidewall may, advantageously, comprise a non-conical profile which may, specifically, be selected from a parabolic profile or an elliptical profile. As used herein, the profile refers to a form of a cross section of the single sidewall perpendicular to the longitudinal axis of the inversely-operated optical concentrator device which may, in particular, be or comprise a parabolic shape or an elliptical shape, respectively. In a particularly preferred embodiment, which is, specifically, adapted for further increasing the concentration efficiency of the spectrometer device, the inversely-operated optical concentrator device may, on one hand, have a round, small entrance aperture at the entrance pupil in order to be capable of catching as much light as possible and, on the other hand, have an elongated and rounded exit aperture, in particular an elliptical exit aperture, at the exit pupil, in particular in order to allow guiding as much light as possible via the length variable filter onto the detector array which may, preferably, exhibit a rectangular form. However, other shapes of the entrance aperture and/or of the exit aperture of the optical concentrator device being operated in reverse direction. As a result of the single rounded sidewall limiting the inversely-operated optical concentrator device and constituting the surface thereof more light beams are guided in a manner that they can reach the length variable filter at the desired spatial position on the length variable filter, whereby the efficiency of the spectrometer device as described herein can, further, be increased, which is in particular contrast to US 2014/131578 A1. As shown below in more detail, this kind of inversely-operated optical concentrator device may increase the efficiency of the spectrometer device by reducing an amount of reflections when transferring the incident light to a length variable filter, in particular, by avoiding that the shape of the single rounded sidewall has any corners, whereby a higher transmission efficiency of the optical concentrator may be achieved.

Various shapes of optical concentrator devices which are operated in normal direction have been presented before. Herein, the optical concentrator device can have a conical shape or a non-conical shape in a fashion that they may be referred to as a "compound parabolic concentrator" or "CPC" or a "compound elliptical concentrator" or "CEC" while further shapes, in particular a "compound hyperbolic concentrator" or "CHC", may be less suited for the purposes of the present invention. According to the state of the art, the conical optical concentrator has , as generally used, been defined by two plane mirror segments which open with respect to each other in a linear manner. Further, the compound parabolic concentrator may be defined by two parabolic mirror segments which may comprise two different focal points each lying on one of the parabolic mirror segments. Hereby, surfaces of the two parabolic mirror segments may be arranged in a symmetrical manner with respect to reflection through an axis of the compound parabolic concentrator. Similarly, the compound elliptical concentrator may, thus, be defined by two elliptical mirror segments, wherein surfaces of the two elliptical mirror segments may be arranged in a symmetrical manner with respect to reflection through an axis of the compound elliptical concentrator.

Thus, the optical concentrator device which is operated in reverse direction, more particular the optically guiding structure which may be located between the input and the output of the optical element, may comprise a conical shape or, preferably, a non-conical shape. Herein, the optical concentrator device having the conical shape may more easily be manufactured. However, as a result of the non-conical shape, the light beams may be guided through the concentrator in a manner that the efficiency at the output of the inversely operated optical concentrator device may be increased. This effect is, especially, based on the non-conical shape of the inversely-operated optical concentrator device which allows, in particular contrast to a conically-shaped inversely-operated optical concentrator device, to guide the incident light in form of light beams through the non-conically shaped inversely-operated optical concentrator device in a manner that less light may be absorbed by the single sidewall of the inversely-operated optical concentrator device. As a result more, light beams can reach the length variable filter at the spatial position on the length variable filter which is configured for receiving the light beam with the particular wavelength as comprised by the light beam. In addition, a transfer function of a non-conical shape shows a steeper onset of light transmission with respect to an entrance angle into the inversely-operated optical concentrator device, thereby exhibiting a theoretical maximum of a completely binary transition from no light transmission to full light transmission for a compound parabolic concentrator. Such a kind of steepness of the transfer function may, thus, be advantageous in minimizing an area of spectroscopic sampling for a given light throughput, thereby providing a clear definition for the sampling spot and supporting in homogenizing a response from the sampling spot.

More particular, the term "conical" with regard to a optical element according to the state of the art refers to a shape of the optical element which can be described by the symmetry group C2v or higher according to the Schoenfliess notation, such as C2v, C4v, or C∞, in particular a truncated cone, wherein, as indicated above, manufacturing tolerances are, however, taken into account. In contrast hereto, the term "non-conical" with regard to the optical element according to the present invention refers to a shape of the optical element which can be described by a symmetry group less than C2v according to the Schoenfliess notation, such as Cs, C2, or C1 as indicated above, wherein, again, manufacturing tolerances are, however, taken into account. In other words, the optically guiding structure which is located between the input and the output of the optical element according to the present invention may, preferably, comprise a shape that may exhibit a diameter at a half distance between the input and the output of the optical element which may, for a conical shape, correspond to an arithmetic mean of a first diameter of the input of the optical element and a second diameter of the output of the optical element whereas it may deviate from the arithmetic mean of the first diameter and the second diameter by at least 10 %, preferably at least 5 %, mostly preferred at least 2 %, especially at least 1 %, for the non-conical shape.

In a particular embodiment, the non-conical shape of the optical concentrator device which is operated in reverse direction may, thus, preferably be selected from a parabolic shape or an elliptical shape. Consequently, the optical concentrator device may, especially, be selected from the group comprising a compound parabolic concentrator and a compound elliptical concentrator. However, other kinds of optical concentrator devices having a non-conical shape may also be feasible.

In particular, the parabolic shape of the optical element, especially of the optically guiding structure which is located between the input and the output of the optical element, may, leaving aside manufacturing tolerances, be described by Equation (1) as follows:

$$y = y_0 + ax^2, \qquad (1)$$

wherein the term x refers to a value along the optical axis of the optical element, in particular, of the optically guiding structure of the inversely-operated optical concentrator device, whereas the term y refers to a value perpendicular to the optical axis, wherein the terms $y_0$ and $a$ provide opportunities for adjusting the parabolic shape with respect of the optical element.

Similarly, the elliptic shape of the optical element, especially of the optically guiding structure which is located between the input and the output of the optical element, may, leaving aside manufacturing tolerances, be described by Equation (2) as follows:

$$y = \pm \frac{a}{b} \sqrt{a^2 - x^2}, \qquad (2)$$

wherein the term x refers to a value along the optical axis of the optical element, in particular, of the optically guiding structure of the inversely-operated optical concentrator device, whereas the term $y$ refers to a value perpendicular to the optical axis, wherein the terms $a$ and $b$ which refer to semi axis of the elliptical shape, again, provide opportunities for adjusting the parabolic shape with respect of the optical element.

The inversely-operated optical concentrator device may be or may comprise a full body of a fully or partially optically transparent material or, as a preferred alternative, may be or may comprise a hollow body which can be, specifically fully and/or uniformly, filled with a gaseous and/or fluid and/or solid optically transparent material and which comprises the single sidewall that may assume the desired conical or non-conical shape. Herein, the at least one material that may show a high degree of optical transparency within in the infrared (IR) spectral range, especially, within the near-infrared (NIR) and mid-infrared (MidIR) spectral range, and which can be chosen for the full body of the optical concentrator device may, preferably, be selected from the group consisting of calcium fluoride ($CaF_2$,), fused silica, germanium, magnesium fluoride (MgF), potassium bromide (KBr), sapphire, silicon, sodium chloride (NaCl), zinc selenide (ZnSe), zinc sulfide (ZnS), borosilicate-crown glasses, transparent conducting oxides (TCO), and transparent organic polymers, wherein silicon and germanium having high reflective indices are particularly preferred since they are capable of supporting total reflection which may occur on the single sidewall of the full body. As an alternative, the gaseous optically transparent material which may be chosen for filling the hollow body having the single rounded sidewall showing the desired conical or non-conical shape may be selected from ambient air, nitrogen gas, or carbon dioxide while the fluid optically transparent material for this purpose may be chosen from immersion oil or Canada balsam, i.e. a turpentine made from the resin of a balsam fir tree, especially from *abies balsamea.* As a further alternative, a vacuum may be present in the hollow body.

In a further preferred embodiment, the optical element may be arranged in a manner that the captured light is transferred to the length variable filter along a light path which is asymmetric with respect to an optical axis of the spectrometer device. As used herein, the term "optical axis" refers to an imaginary line of symmetry along which other elements of the spectrometer device apart from optical element, in particular, the length variable filter and the detector array, may be invariant with regard to a reflection or a rotation of the symmetric optical elements comprised by the spectrometer system. Transferring the captured light to the length variable filter may, thus, be achieved by using the at least one optical element, wherein at least one property of the optical element, in particular, at least one of a shape of the optical element or an arrangement of the optical element with respect to the optical axis of the spectrometer device, may result in a light path which may exhibit an asymmetric course with respect to the optical axis of the spectrometer device.

With regard to a body or at least one element thereof, the terms "symmetric" or "symmetrical" refer, as generally used, to a geometric property of the body having a shape or at least one element thereof that may be invariant to an application of at least one operation usually denoted as "geometric transformation" which may, in particular, include a reflection, a rotation, a translation and/or a combination thereof. In the present case, however, the preferred geometric transformations may be the reflection and the rotation. In particular, the body or the element thereof can be considered to have reflectional symmetry with respect to a line and/or to a mirror plane if the line and/or the mirror plane, respectively, can divide the shape of the body or the element thereof into two partitions which assume mirror images of each other. By way of example, the body may be considered as symmetric in an event in which it comprises the two identical mirror segments which are arranged in a manner with respect to an axis of reflection that they can be considered as mirror images of each other. Similarly, the body can be considered to have a rotational symmetry with respect to at least one fixed point and/or a mirror plane comprising the axis of rotation of the body or the element thereof if it can be rotated about the fixed point or the mirror plane, respectively, in a manner that the shape of the body or the element thereof may not change thereby. In contrast hereto, the terms "asymmetric" or "asymmetrical" may denote that at least one of the geometric properties of the body under consideration may not be invariant to at least one of the geometric transformations which may be applicable to this body.

More particular, one of the following symmetry groups may be applicable to the optical element. As generally used, the term "symmetry group" describes a particular symmetry of the body or the element thereof by indicating which kind of geometric transformations may be applicable to the body or the element thereof. For this consideration, a particular symmetry group may, especially, be denoted by using the so-called "Schoenfliess notation". Herein, the following terms which are defined as follows may, preferably, be applicable to the shape of the body of the element thereof:

- $C_\infty$ which refers to the symmetry of a truncated cone, wherein the shape of the truncated cone is preserved under a rotation about an arbitrary angle with respect to a mirror plane comprising the axis of rotation of the truncated cone;
- C4v which refers to a square pyramid trunk, wherein the shape of the square pyramid trunk is only preserved under a rotation about an angle of 360°/4 = 90° with respect to a mirror plane comprising the axis of rotation of the square pyramid trunk;
- C2v which refers to a rectangular pyramid trunk apart from a square pyramid trunk, wherein the shape of the rectangular pyramid trunk is only preserved under a rotation about an angle of 360°/2 = 180° with respect to a mirror plane comprising the axis of rotation of the rectangular pyramid trunk;
- Cs which refers to a reflectional symmetry only, wherein the shape of the body or the element thereof is only preserved by a reflection on a mirror plane;
- C2 which refers to a two-fold symmetry only, wherein the shape of the body or the element thereof may only be preserved under a rotation about an angle of 360°/2 = 180° with respect to a particular axis of rotation of the body or the element thereof; or
- C1 which refers to an absence of any symmetry elements.

For further information about the Schoenflies-Notation, reference may, for example, be made to Morton Hamermesh, Group Theory and its application to physical problems, Dover Publications, Mineola, N.Y. 1989, Chapter 2, Symmetry Groups, pages 32-67.

With particular respect to the present invention, the optical element may, thus, being denoted as having an asymmetric shape in an event in which the shape of the optical element may exhibit less symmetric elements as described by the symmetry group C2v according to the Schoenfliess notation, in particular, having at least one of the symmetry groups Cs, C2, or C1. In this regard, it may, however, be emphasized that for the consideration of the symmetry of the optical element only those partitions of the optical element may be relevant which may affect the beam path of the incident light, especially, the optically guiding structure which is located between the input and the output of the optical element. In particular, other shapes of the optical element, such as an exterior shape, may, thus, be left out of consideration. In addition, for determining the symmetry of the optical element, manufacturing tolerances are taken into account.

In an embodiment in which the inversely-operated optical concentrator device may be arranged in an asymmetric manner with respect to the optical axis of the spectrometer device, the response of the spectrometer device can no longer be expected to be equal for small wavelengths detectable on one side of the detector array and for long wavelengths detectable on the opposing side of the detector array. However, this observation may exhibit particular advantages for the spectrometer device, in particular, when an incandescent lamp may be used as the illumination source. As generally used, the term "incandescent lamp" refers to an electric light having a heatable element, such as a wire filament heated, which may be heated to a temperature that it may emit light, especially infrared light. Since the incandescent lamp can, therefore, be considered as a thermal emitter within the infrared spectral range, an emission power of the incandescent lamp decreases with increasing wavelength. In addition, known materials which may, typically, be used for absorption within the infrared spectral range, generally, exhibit a tendency of increased absorption with increasing wavelength. Further, as already indicated above, since the bandpass width of the length variable filter, in particular of the linearly variable filter, which may, typically, assume a constant value, such as 1 %, over the spectral range of the length variable filter, the resolution of the length variable filter, which is inversely proportional to the bandpass width, also decreases with increasing wavelength. Further, the resolution of the length variable filter, in general, depends on the center wavelength of the length variable filter. Combining all mentioned effects, it appears that in a symmetric spectrometer device the response of the spectrometer device decreases with increasing wavelength.

However, in accordance with a further preferred embodiment of the present invention, using the inversely-operated optical concentrator device having an asymmetric design or, alternatively or in addition, the inversely-operated optical concentrator device being arranged in an asymmetric manner with respect to the optical axis of the spectrometer device may allow adjusting a length of a path that a light beam may travel from the entry into the inversely-operated optical concentrator device through the inversely-operated optical concentrator device to the exit of the inversely-operated optical concentrator device. As a result, an asymmetry of the inversely-operated optical concentrator device, either in setup or arrangement, may allow to provide a shorter path for a light beam having a longer wavelength compared to a light beam having a shorter wavelength and, additionally or as an alternative, the light beam to impinge the linearly variable filter closer to normal incidence, whereby the efficiency may, further be increased. As a result, the further preferred embodiment may facilitate providing a spectrometer device which may, especially, be adapted for allowing a higher efficiency at longer wavelengths. Further, although it may appear that the efficiency at shorter wavelengths may, therefore, be diminished, in particular, due to a longer path for a light beam having a shorter wavelength compared to a light beam having a longer wavelength, this effect may, in this kind of arrangement, generally be outweighed by the above-indicated higher emission power of the incandescent lamp and the lower bandpass width at shorter wavelengths. Thus, this kind of arrangement can be used for equipping the spectrometer device with an efficiency which may be more equally distributed over the wavelength range of the spectrometer device according to the present invention compared to known spectrometer devices, especially in the infrared spectral range.

In this further preferred embodiment of the asymmetric arrangement according to the present invention, the optical element, in particular, the inversely-operated optical concentrator device may, therefore, be tilted with respect to a plane which is perpendicular to a receiving surface of the length variable filter as described above. As generally used, the term "tilted" refers to an inclination of a symmetry axis of the optical concentrator device with respect to the plane normal to the receiving surface of the length variable filter in a perpendicular manner. As a result of the tilted arrangement of the optical element, the entrance axis and the exit pupil axis of the inversely-operated optical concentrator device may be one of: shifted and parallel with respect to each other, shifted but not parallel with respect to each other, or not shifted and not parallel with respect to each other. More preferred, the optical concentrator device may be tilted with respect to this plane which is normal to the receiving surface of the length variable filter in a manner that the light beams may impinge the length variable filter normal to the receiving surface of the length variable filter on a spatial position on the length variable filter being designated for receiving a particular wavelength of the incident light. As an alternative, the optical concentrator device may be tilted with respect to this plane in a further manner that further light beams may impinge a further spatial position on the length variable filter being designated for receiving a further particular wavelength, wherein the further particular wavelength exceeds the wavelength of the incident light beam, i.e. exhibits a longer wavelength than the incident light which may be directed to impinge the surface of the length variable filter.

Therefore, the incident light beam may pass the length variable filter at a longer wavelength compared to its inherent wavelength but due to the relative arrangement between the length variable filter and the detector array, which may be separated by a gap as described elsewhere in this document in more detail, the incident light beam may, still, impinge the particular optical sensor which is provided for determining the intensity of the incident light at the particular wavelength of the incident light beam. As a result, not only light beams which impinge the length variable filter normal to the receiving surface of the length variable filter on a spatial position on the length variable filter being designated for this purpose but also light beams which impinge the length variable filter on a further spatial position being designated for receiving a longer wavelength than the wavelength of the incident light beam but, still, impinge the particular optical sensor designed for receiving the particular wavelength of the incident light beam, may contribute to the electrical signals being generated by the photosensitive area of the particular individual pixel sensor. Consequently, the efficiency of the spectrometer device can, in this manner, even further be increased.

In addition, the spectrometer device according to the present invention may, further, comprise at least one transfer device, which can, in particular, be arranged between the inversely-operated optical concentrator device and the length variable filter. Most preferably, the light beam which emerges from the object may, therefore, travel firstly through the inversely-operated optical concentrator device and, thereafter, at or through the transfer device until it may, subsequently, pass the length variable filter until it may, finally, impinge the detector array. As used herein, the term "transfer device" may, thus, refer to an optical component which can be configured to transfer the light beam emerging from the inversely-operated optical concentrator device to the detector array. In a particular embodiment, the transfer device can, thus, be designed to shape the light beam before it may be guided to the length variable filter.

Particularly, the transfer device may be selected from a group consisting of an optical lens, a curved mirror, a grating, and a diffractive optical element. More particular, the optical lens may, especially, be selected from a group consisting of a biconvex lens, a plano-convex lens, a biconcave lens, a plano-concave lens, an aspherical lens, a cylindrical lens and a meniscus lens. Hereby, the transfer element may comprise a material which may be at least partially transparent, preferably over the whole wavelength range of the length variable filter as indicated above. For this purpose, the same or similar optically transparent materials as mentioned in this respect can also be used. However, further optical elements may also be feasible.

In a further aspect of the present invention, a spectrometer system is disclosed. Accordingly, the spectrometer system comprises

- a spectrometer device as described above and/or below in more detail; and
- an evaluation unit designated for determining information related to a spectrum of an object by evaluating detector signals provided by the spectrometer device.

Herein, the components of the spectrometer system as listed above may be individual components. Alternatively, two or more of the components of the spectrometer system may be integrated into a single integral component. Further, the evaluation unit may be formed as an individual evaluation unit independent from the spectrometer device but may preferably be connected to the detector array, in particular, in order to receive the detector signals as generated by the spectrometer device. Alternatively, the at least one evaluation unit may fully or partially be integrated into the at least one spectrometer device.

According to the present invention, the spectrometer system comprises a spectrometer device and an evaluation unit. With respect to the spectrometer device, reference may be made to the description elsewhere in this document. As further used herein, the term "evaluation unit", generally, refers to an arbitrary device designed to generate the desired items of information, i.e. the at least one item of information related to the spectrum of the object. As an example, the evaluation unit may be or may comprise one or more integrated circuits, such as one or more application-specific integrated circuits (ASICs), and/or one or more data processing devices, such as one or more of computers, digital signal processors (DSP), field programmable gate arrays (FPGA) preferably one or more microcomputers and/or microcontrollers. Additional components may be comprised, such as one or more preprocessing devices and/or data acquisition devices, such as one or more devices for receiving and/or preprocessing of the detector signals, such as one or more AD-converters and/or one or more filters. As used herein, the detector signal is provided by the spectrometer device, in particular, by the detector array of the spectrometer device. Further, the evaluation unit may comprise one or more data storage devices. Further, the evaluation unit may comprise one or more interfaces, such as one or more wireless interfaces and/or one or more wire-bound interfaces.

The at least one evaluation unit may be adapted to perform at least one computer program, such as at least one computer program performing or supporting the step of generating the items of information. As an example, one or more algorithms may be implemented which, by using the sensor signals as input variables, may perform a predetermined transformation into the position of the object. For this purpose, the evaluation unit may, particularly, comprise at least one data processing device, in particular an electronic data processing device, which can be designed to generate the items of information by evaluating the detector signals. Thus, the evaluation unit is designed to use the detector signals as input variables and to generate the items of information related to the spectrum of the object by processing these input variables. The processing can be done in parallel, subsequently or even in a combined manner. The evaluation unit may use an arbitrary process for generating these items of information, such as by calculation and/or using at least one stored and/or known relationship. Besides the detector signals, one or a plurality of further parameters and/or items of information can influence said relationship, for example at least one item of information about a relative arrangement of the optical element, the length variable filter, and the detector array as comprised by the spectrometer device. The relationship can be determined or determinable empirically, analytically or else semi-empirically. Particularly preferably, the relationship comprises at least one calibration curve, at least one set of calibration curves, at least one function or a combination of the possibilities mentioned. One or a plurality of calibration curves can be stored for example in the form of a set of values and the associated function values thereof, for example in a data storage device and/or a table. Alternatively or additionally, however, the at least one calibration curve can also be stored for example in parameterized form and/or as a functional equation. Separate relationships for processing the detector signals into the items of information may be used. Alternatively, at least one combined relationship for processing the detector signals is feasible.

Various possibilities are conceivable and can also be combined.

By way of example, the evaluation unit can be designed in terms of programming for the purpose of determining the items of information. The evaluation unit can comprise, in particular, at least one computer, for example at least one microcomputer. Furthermore, the evaluation unit can comprise one or a plurality of volatile or nonvolatile data memories. As an alternative or in addition to a data processing device, in particular at least one computer, the evaluation unit can comprise one or a plurality of further electronic components which are designed for determining the items of information, for example an electronic table and in particular at least one look-up table and/or at least one application-specific integrated circuit (ASIC).

Further, the evaluation unit can also be designed to completely or partially control or drive the spectrometer device or a part thereof, for example by the evaluation unit being designed to control at least one illumination source and/or to control the optical element of the spectrometer and/or to control at least one modulation device of the detector. The evaluation unit can, in particular, be designed to carry out at least one measurement cycle in which a plurality of detector signals are picked up, especially, the detector signals of successively arranged individual pixelated sensors along the length of the detector array and/or at different modulation frequencies of the illumination. Herein, acquiring the detector signals can be performed sequentially, in particular, by using a row scan and/or line scan. However, other embodiments are also possible, for example, embodiments in which especially selected individual pixel sensors are recorded simultaneously.

In a particular embodiment, the detector can have, thus, at least one modulation device for modulating the illumination, preferably for a periodic modulation, especially a periodic beam interrupting device. As generally used, a modulation of the illumination comprises a process in which a total power of the illumination is varied, preferably periodically, in particular with one or a plurality of modulation frequencies. In particular, a periodic modulation can be effected between a maximum value and a minimum value of the total power of the illumination. The minimum value can be 0, but can also be > 0, such that, by way of example, complete modulation does not have to be effected. The modulation can be effected for example in a beam path between the object and the detector array, such as by the modulation device being arranged in said beam path. Alternatively or additionally, however, the modulation can also be effected in a beam path between an optional illumination source for illuminating the object and the object, for example by the modulation device being arranged in said beam path. A combination of these possibilities is also conceivable. By way of example, the modulation device can comprise a beam chopper or some other type of periodic beam interrupting device, for example comprising at least one interrupter blade or interrupter wheel, which preferably rotates at constant speed and which can thus periodically interrupt the illumination. Alternatively or additionally, however, it is also possible to use one or a plurality of different types of modulation devices, for example modulation devices based on an electro-optical effect and/or an acousto-optical effect. Once again alternatively or additionally, the optional illumination source itself can also be designed to generate a modulated illumination, for example by said illumination source itself having a modulated intensity and/or total power, for example a periodically modulated total power, and/or by said illumination source being embodied as a pulsed illumination source, for example as a pulsed laser. Thus, by way of example, the modulation device can also be wholly or partly integrated into the illumination source. Various possibilities are conceivable. Accordingly, the detector array can be designed to detect at least two detector signals in the case of different modulations having different modulation frequencies. The evaluation device can be designed to generate the information related to the spectrum from two or more detector signals. By way of example, the detector can be designed to bring about a modulation of the illumination of the object with a frequency of 0.05 Hz to 1 MHz, such as 0.1 Hz to 10 kHz.

In a further aspect of the present invention, a use of a spectrometer device and a spectrometer system according to the present invention is disclosed. Therein, the use of the spectrometer device and the spectrometer system for a purpose of determining information related to a spectrum of an object is proposed. Herein, the spectrometer device and the spectrometer system may, preferably, be used for a purpose of use selected from the group consisting of: an infrared detection application; a heat-detection application; a thermometer application; a heat-seeking application; a flame-detection application; a fire-detection application; a smoke-detection application; a temperature sensing application; and a spectroscopy application. Further the spectrometer device and the spectrometer system according to the present invention can, preferably, be used to monitor exhaust gas, to monitor combustion processes, to monitor pollution, to monitor industrial processes, to monitor chemical processes, to monitor food processing processes, to assess water quality, and/or to assess air quality. Further, spectrometer devices and spectrometer systems according to the present invention may be used for quality control, temperature control, motion control, exhaust control, gas sensing, gas analytics, motion sensing, and/or chemical sensing. Further applications are feasible.

The above-described spectrometer device, the spectrometer system and the proposed uses have considerable advantages over the prior art. Thus, generally, a simple and, still, efficient spectrometer device and a spectrometer system for an accurate determining of information related to a spectrum of an object may be provided. Therein, as an example, an infrared spectrum of an object covering a partition of the infrared spectral range can be acquired in a fast and efficient way. As compared to devices known in the art, the spectrometer device and the spectrometer system as proposed herein provide a high degree of simplicity, specifically with regard to an optical setup of the spectrometer device. Herein, a combination of the particular optical element, the length variable filter, and the detector array as comprised by the spectrometer device may be advantageous since the particular optical element comprising an optical concentrator device having the single rounded sidewall and being operated in reverse direction is, particularly, adapted for reducing an amount of reflections when transferring the incident light to a length variable filter, in particular, by the shape of the single rounded sidewall which is devoid of any corners, whereby a higher concentration efficiency as currently available may be achieved. This high degree of simplicity, in combination with the possibility of high resolution measurements, is specifically suited for sensing, detecting and/or monitoring applications in the infrared (IR) spectral region, especially in the near-infrared (NIR) and mid-infrared (MidIR) spectral region, in particular, for sensing or detecting heat, flames, fire, or smoke, as well as monitoring exhaust gas, combustion processes, pollutions, industrial processes, chemical process, food processing processes, water quality, or air quality. Further applications are possible.

Brief description of the figures

Further optional details and features of the invention are evident from the description of preferred exemplary embodiments which follows in conjunction with the dependent claims. In this context, the particular features may be implemented alone or with features in combination. The invention is not restricted to the exemplary embodiments. The exemplary embodiments are shown schematically in the figures. Identical reference numerals in the individual figures refer to identical elements or elements with identical function, or elements which correspond to one another with regard to their functions.

Specifically, in the figures:

Figure 1                shows an exemplary embodiment of a spectrometer system comprising a spectrometer device according to the present invention;

Figures 2A and 2B       show cross-sections through exemplary embodiments of preferred non-conical shapes of an optical concentrator device;

Figure 3                shows a further cross-section through an exemplary embodiment of the optical concentrator device;

Figures 4A and 4B       show a further exemplary embodiment of the spectrometer device using an optical concentrator device in an asymmetric arrangement; and

Figures 5A and 5B       show a variation of the light transmission in a symmetric arrangement (Figure 5A) and an asymmetric arrangement (Figure 5B), respectively, of the optical concentrator device.

Exemplary embodiments

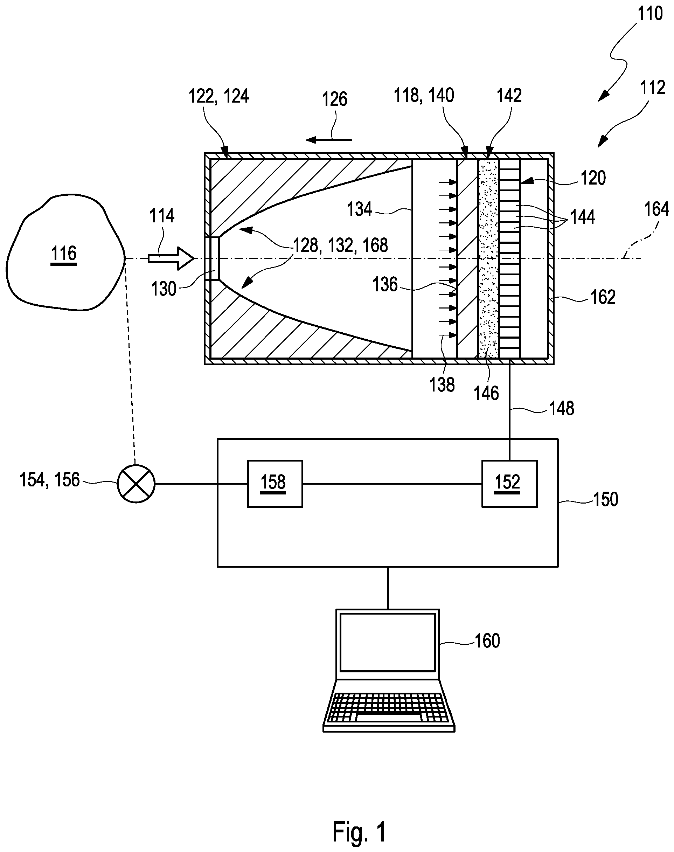

Figure 1 illustrates, in a highly schematic fashion, an exemplary embodiment of a spectrometer system 110 which comprises a spectrometer device 112 according to the present invention. As generally used, the spectrometer device 112 is an apparatus which is capable of recording a signal intensity of incident light 114 with respect to a corresponding wavelength or a wavelength interval of the incident light 114 over a range of wavelength which is denoted as a spectrum or a partition thereof. According to the present invention, the spectrometer device 112 may, especially, be adapted for recording a spectrum in the infrared (IR) spectral region, preferably, in the near-infrared (NIR) and the mid-infrared (MidIR) spectral range, especially, wherein the incident light may have a wavelength of 1 $\mu$m to 5 $\mu$m, preferably of 1 $\mu$m to 3 $\mu$m, and can, thus, be applicable for a detection of heat, flames, fire, or smoke, wherein further applications may be feasible. Herein, the incident light 114 may be generated and/or reflected by an object 116, which may be a living object and a non-living object, such as comprising one or more articles and/or one or more parts of an article, wherein the at least one article or the at least one part thereof may comprise at least one component which can provide a spectrum which may be suitable for investigations in the IR, especially in the NIR spectral region.

The exemplary spectrometer device 112 as schematically depicted in Figure 1 comprises a linearly variable filter 118 as a preferred example of a length variable filter. Herein, the linearly variable filter 118 is designated for separating the incident light 114 into a spectrum of constituent wavelength signals, a detector array 120 which is designed for determining respective intensities of received wavelength signals, and an optical element 122 which is designated for receiving incident light 114 from the object 116 and transferring the incident light 114 to the linearly variable filter 118.

According to the present invention, the optical element 122 comprises an optical concentrator device 124, wherein the optical concentrator device is operated in reverse direction 126, wherein the inversely-operated optical concentrator device 124 comprises a single rounded sidewall 128. Herein, the inversely-operated optical concentrator device 124 comprises an input 130, an optically guiding structure 132 and an output 134. Consequently, the incident light 114 which may be emitted or reflected by the object 116 or may have passed through the object 116 enters the inversely-operated optical concentrator device 124 at the input 130 which is designed for receiving the incident light 114. Thereafter, the incident light 114 captured by the input 130 passes through the optically guiding structure 132 which is, preferably, designed for spreading out the incident light 114. Finally, the incident light 114 which has been spread out in this manner is emitted by the output 134 which is being designated for this purpose. Thus, an angular spread of light beams which are emitted at the output 134 can, simultaneously, be reduced compared to the angular spread of the incident light 114. As a result, the inversely-operated optical concentrator device 124 allows modifying the incident light 114 as provided by the object 116 in a manner that the light which is emitted at the output 134 of the inversely-operated optical concentrator device 124 exhibits a reduced angular spread.

Consequently, a predominant share of the light beams provided by the output 134 of the inversely-operated optical concentrator device 124 impinges the linearly variable filter 118 in a parallel manner, especially, normal to a receiving surface 136 of the linearly variable filter 118 in a perpendicular manner. As used in this exemplary embodiment, the linearly variable filter 118 is or comprises an optical filter having a plurality of interference filters which are, preferably, provided in a continuous arrangement of interference filters. Herein, each of the interference filters may form a bandpass with a variable center wavelength for each spatial position 138 on the receiving surface 136 of the linearly variable filter 118 in a manner that the variable center wavelength may be a linear function of the spatial position 138. As exemplary shown in Figure 1, the linearly variable filter 118 may, thus, be arranged, preferably continuously, along a single dimension, usually as "length" of the linearly variable filter 118. By way of example, the linearly variable filter 118 may be a wedge filter that may carry at least one response coating 140 on a transparent substrate 142, wherein the response coating 140 may exhibit a spatially variable property, in particular, a spatially variable thickness (not depicted here). Herein, the transparent substrate 142 may comprise at least one material that may exhibit a high degree of optical transparency in the IR spectral range which can, preferably, be selected from the group consisting of calcium fluoride ($CaF_2$,), fused silica, germanium, magnesium fluoride (MgF), potassium bromide (KBr), sapphire, silicon, sodium chloride (NaCl), zinc selenide (ZnSe), zinc sulfide (ZnS), borosilicate-crown glasses, transparent conducting oxides (TCO), and transparent organic polymers, wherein $CaF_2$, fused silica, MgF, KBr, sapphire, NaCl, ZnSe, ZnS, borosilicate-crown glasses, transparent conducting oxides, and selected transparent organic polymers may, especially, be applicable for the NIR spectral range. However, other embodiments of the linearly variable filter 118 may also be feasible. However, other kinds of length variable filters may also be feasible for the purposes of the present invention.

The linearly variable filter 118 is designated for separating the incident light 114 into a spectrum of constituent wavelength signals. For this purpose, the incident light 114 may, preferably, pass through the linearly variable filter 118 at the particular spatial position 138 which is related to the wavelength of the incident light 114. After the incident light 114 has passed through the linearly variable filter 118 at the particular spatial position 138 related to the wavelength of the incident light 114, it, subsequently, impinges the detector array 120, in particular one of a plurality of pixelated sensors 144 as comprised by the detector array 120. Thus, each of the pixelated sensors 144 receives at least a portion of one of the constituent wavelength signals as provided by the incident light 114 after having passed through the linearly variable filter 118 as described above. Moreover, each of the pixelated sensors 144 is adapted to provide a detector signal which is related to an intensity of each constituent wavelength. In other words: The spectrometer device 112 is, thus, designated to generate a plurality of detector signals based on the constituent wavelength signals, wherein each of the detector signals is related to the intensity of each constituent wavelength of the spectrum.

As further indicated in Figure 1, the detector array 120 may, preferably, be separated from the linearly variable filter 118 by a transparent gap 146, wherein the transparent gap 146 may, by way of example, be obtained by using the transparent substrate 142. As a result, by selecting a suitable width for the transparent gap 146 a more precise adjustment of the detector array 120 with regard to the linearly variable filter 118 can be achieved. As indicated below in more detail, adjusting the transparent gap 146 may allow further increasing the efficiency of the spectrometer device 112.

The plurality of detector signals may, as schematically depicted in Figure 1, via a signal lead 148 be transmitted to an evaluation unit 150, which may be comprised by the spectrometer system 110 in addition to the spectrometer device 110. Herein, the evaluation unit 150 is, generally, designated for determining information related to a spectrum of the object 116 by evaluating the plurality of detector signals as provided by the detector array 120 of the spectrometer device 112. For this purpose, the evaluation unit 150 may comprise one or more electronic devices and/or one or more software components, in order to evaluate the plurality of the detector signals, which are symbolically denoted by a signal evaluation unit 152. Herein, the evaluation unit 150 may be adapted to determine the at least one item of information related to a spectrum of the object 116 by comparing more than one of the detector signals.

The incident light 114 which is received by the optical element 122 of the spectrometer device 112 may be generated by a light-emitting object 116. Alternatively or in addition, the incident light 114 may be generated by a separate illumination source 154, which may include an ambient light source and/or an artificial light source, in particular an incandescent lamp 156, which may be designated for illuminating the object 116 in a manner that at least a part of the light generated by the illumination source 154 may be able to pass through the object 116 (not depicted here) and/or in a manner that the object 116 may be able to reflect at least a part of the light generated by the illumination source 154 such that the incident light 114 may be configured to be received by the optical element 122. Herein, the illumination source 154 may be or comprise a continuously emitting light source and/or a modulated light source. As further depicted in Figure 1, the illumination source 154 may be controlled by at least one illumination control unit 158 which may be adapted, if required, for providing modulated light. Herein, the illumination control unit 158 may, additionally, provide information about the illumination to the signal evaluation unit 152 and/or be controlled by the signal evaluation unit 152, which is symbolically indicated by a connection between the illumination control unit 158 and the signal evaluation unit 152 in Figure 1. Alternatively or in addition, controlling the illumination of the object 116 may be effected in a beam path between the illumination source 154 and the object 116 and/or between the object 116 and the optical element 122. Further possibilities may be conceivable.

Generally, the evaluation unit 150 may be part of a data processing device 160 and/or may comprise one or more data processing devices 160. The evaluation unit 150 may be fully or partially integrated into a housing 162 which at least comprises the spectrometer device 112 and/or may fully or partially be embodied as a separate device which may electrically be connected in a wireless or wire-bound fashion to the spectrometer device 112. The evaluation unit 150 may further comprise one or more additional components, such as one or more electronic hardware components and/or one or more software components, such as one or more measurement units and/or one or more evaluation units and/or one or more controlling units (not depicted here).

As further illustrated in the exemplary embodiment of Figure 1, the spectrometer device 112 comprises the optical element 122, the linearly variable filter 118, and the detector array 120, which are, in this particular embodiment, arranged along an optical axis 164 of the spectrometer device 112. Specifically, the optical axis 164 may be an axis of symmetry and/or rotation of the setup of at least one of the optical element 122, the linearly variable filter 118, and the detector array 120. Especially, the optical axis 164 may, thus, be parallel to a plane which is perpendicular to the receiving surface 136 of the linearly variable filter 118. Further, the optical element 122, the linearly variable filter 118, and the detector array 120 may, preferably, be located inside the housing 162 comprising at least the spectrometer device 112.

In a further embodiment, at least one transfer device (not depicted here), in particular, a refractive lens, may, additionally, be placed between the optical element 122 and the linearly variable filter 118. However, since the optical element 122 is implemented in the particular embodiment of Figure 1 in form of the inversely-operated optical concentrator device 124 comprising the conical shape 128, the use of a transfer device, in particular, a refractive lens, appears to be dispensable because this implementation of the optical element 122 is capable of, concurrently, taking over the function of the transfer device, in particular, a refractive lens, especially with regard to providing a predominant share of parallel light beams which may impinge on the linearly variable filter 118 normal to the receiving surface 136 of the linearly variable filter 118 in a perpendicular manner.

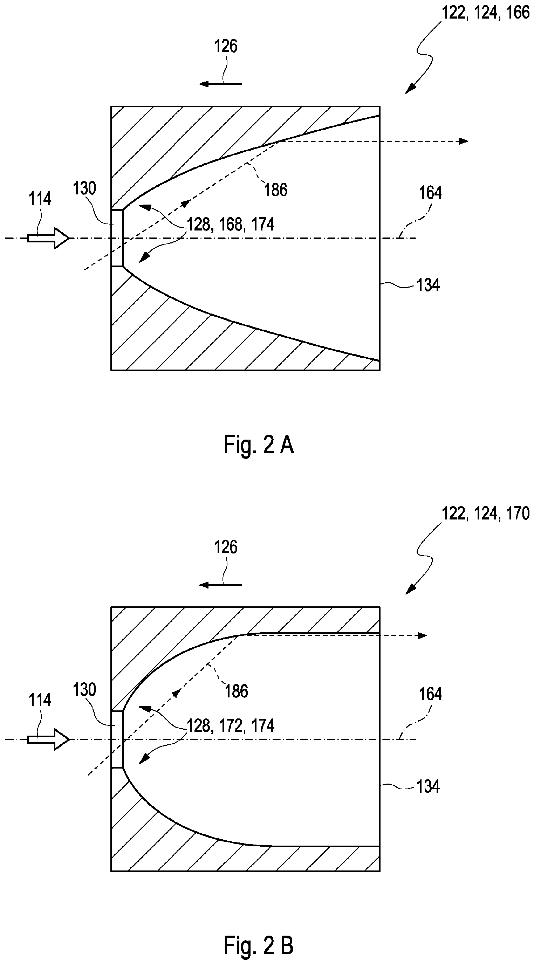

Figures 2A and 2B illustrate cross-sections through two exemplary embodiments of preferred shapes of the single rounded sidewall 128 of the inversely-operated optical concentrator device 124. Figure 2A schematically depicts a compound parabolic concentrator 166 in which the rounded shape of the single sidewall 128 of the optical concentrator device 124 comprises a parabolic shape 168 while Figure 2B schematically depicts a compound elliptical concentrator 170 in which the rounded shape of the single sidewall 128 of the optical concentrator device 124 comprises an elliptical shape 172. However, the single sidewall 128 of the inversely-operated optical concentrator device 124 may also assume a further shape which may be a single rounded shape.

Herein, the inversely-operated optical concentrator device 124 may be provided in form of a full body (not depicted here) of a transparent optical material having a high optical transmittance in the IR spectral range in order to enhance a reflectivity of the optical concentrator device 124. In particular, the inversely-operated optical concentrator device 124 may be provided in form of the full body of an at least partially optically transparent material having a high degree of optical transparency in the IR spectral range which can, preferably, be selected from the group consisting of calcium fluoride ($CaF_2$,), fused silica, germanium, magnesium fluoride (MgF), potassium bromide (KBr), sapphire, silicon, sodium chloride (NaCl), zinc selenide (ZnSe), zinc sulfide (ZnS), borosilicate-crown glasses, transparent conducting oxides (TCO), and transparent organic polymers, wherein $CaF_2$, fused silica, MgF, KBr, sapphire, NaCl, ZnSe, ZnS, borosilicate-crown glasses, transparent conducting oxides, and selected transparent organic polymers may, especially, be applicable for the NIR spectral range, wherein silicon and germanium having high refractive indices are particularly preferred since they are capable of supporting total reflection which may occur on sidewalls of the full body.

However, as further illustrated in Figures 2A and 2B, the inversely-operated optical concentrator device 124 may, as an alternative, be provided in form of a hollow body 174 having the single sidewall 128 which may be arranged in a manner that it constitutes the desired shape, in particular, the parabolic shape 168 of Figure 2A or the elliptical shape 172 of Figure 2B. Again, the single sidewall 128 of the inversely-operated optical concentrator device 124 may assume a different shape 165 as long as this different shape generates the desired single sidewall 128. For this purpose, the hollow body 174 having the single sidewall 128 may comprise a vacuum or may, preferably fully and/or uniformly, be filled with a gaseous and/or fluid optically transparent material, especially selected from ambient air, nitrogen gas, carbon dioxide, immersion oil, or Canada balsam, in order to be applicable as the optical concentrator device 124 operated in the reverse direction 126.

In known optical concentrator devices the sidewalls of the hollow body 174 which constitutes the inversely-operated optical concentrator device 124 may be designed as sidewalls which are adapted to absorb such wavelengths of the incident light 114 which may deviate to a high degree from a path which can, eventually, guide the incident light to impinge the linearly variable filter 118 in a predominantly parallel manner. However, such kinds of sidewalls of the hollow body 174 may, as indicated above, diminish the efficiency of the spectrometer device 112 since an absorptive share of the incident light 114 is deterred from passing the linearly variable filter 118 and, eventually, reaching the detector array 120 and can, thus, not contribute to the detector signal.

Therefore, according to the present invention, the single sidewall 128 of the hollow body 174 constituting the inversely-operated optical concentrator device 124 may, as depicted in Figures 1, 2A and 2B, be designated as a single reflective sidewall 128 which may be adapted for reflecting incident light 114. As a result, the single reflective sidewall 128 may, thus, be capable of increasing the efficiency of the spectrometer device 112 by allowing additional light beams 186 to be guided, by reflection on the single reflective sidewall 128, to the linearly variable filter 118 and, subsequently, to the detector array 120 where they, may, in addition, contribute to the detector signal. Consequently, providing the single reflective sidewall 128 which may define the hollow body 174 which implements the inversely-operated optical concentrator device 124 can, thus, further increase the efficiency of the spectrometer device 112, in particular, by reducing the signal-to-noise ratio.

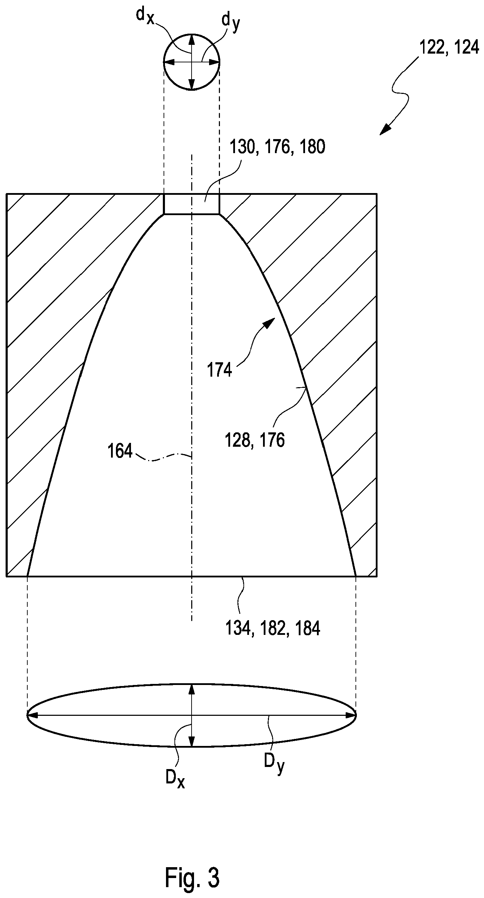

Further, Figure 3 shows a cross-section through an exemplary embodiment of a preferred inversely-operated optical concentrator device 124 according to the present invention. Herein, the single reflective sidewall 128 is generated by the hollow body 174 which may, as indicated above, comprise a vacuum or may, preferably fully and/or uniformly, be filled with a gaseous and/or fluid optically transparent material, especially selected from ambient air, nitrogen gas, carbon dioxide, immersion oil, or Canada balsam. Herein, the single reflective sidewall 128 forms a boundary which may be adapted to limit the inversely-operated optical concentrator device 124 and constitute a surface thereof. In particular, the single rounded sidewall 128 may constitute a shell surface 176 which may, specifically, be adapted to connect an entrance aperture 178 at an entrance pupil 180 and an exit aperture 182 at an exit pupil 184. More particular, the single rounded sidewall 128 may, preferably, comprise a non-conical profile, specifically selected from a parabolic profile or an elliptical profile. Thus, the shell surface 176 of the single rounded sidewall 128 as exemplarily illustrated in Figure 3 assumes a shape in three-dimensional space in a manner that the shape of the single rounded sidewall 128 is devoid of any corners.

In the particularly preferred embodiment as schematically depicted in Figure 3, the entrance aperture 178 at the entrance pupil 180 the inversely-operated optical concentrator device 124 may, in order to be capable of catching as much light as possible, preferably comprise a small round opening having dimensions $d_x$, $d_y$, wherein a quotient $d_y/d_x$ may assume a value of 0.75 to 1.25, preferably of 0.9 to 1.1, in particular of 0.95 to 1.05. On the other hand, the exit aperture 182 at the entrance pupil 184 the inversely-operated optical concentrator device 124 may, in order to allow guiding as much light as possible via the length variable filter 118 onto the detector array 120 which exhibits a rectangular form in this embodiment, may comprise an elongated and rounded opening, in particular an elliptical opening having dimensions $D_x$, $D_y$, wherein a quotient $D_y/D_x$ may assume a value of 1.5 to 20, preferably of 2 to 10, in particular of 2.5 to 6. However, especially depending on the form of the detector array 120, other shapes of the entrance aperture 178 and/or of the exit aperture 182 of the optical concentrator device 124 being operated in reverse direction may also be feasible.

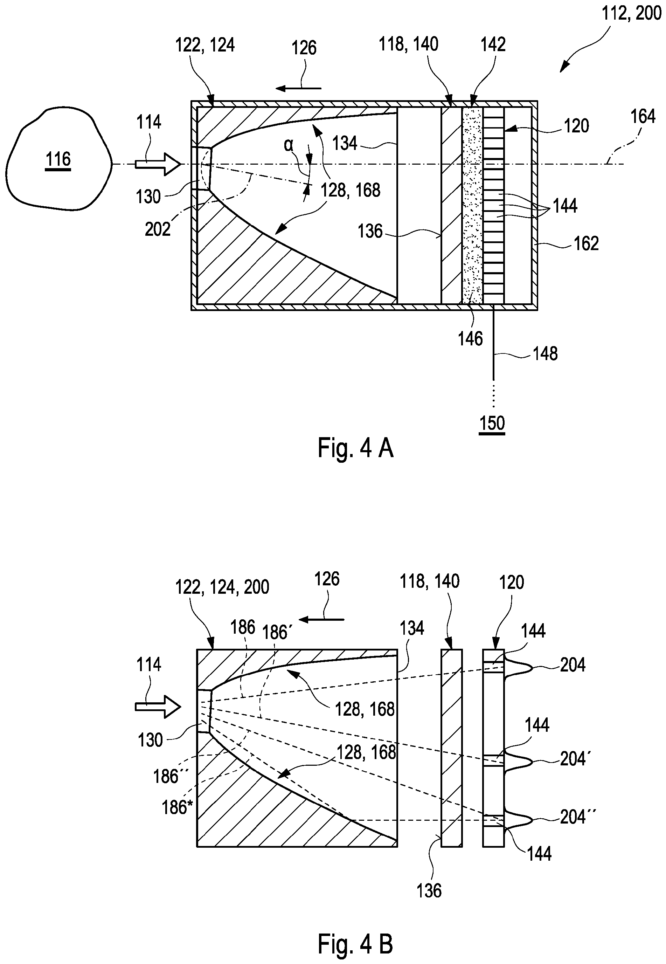

Further, Figure 4 schematically illustrates a further exemplary embodiment of the spectrometer device 112 according to the present invention. In contrast to the exemplary embodiment of the spectrometer device 112 of Figure 1 which assumes a symmetric arrangement of the optical element 122, the linearly variable filter 118, and the detector array 120 along the optical axis 164 of the spectrometer device 112, the optical element 122 of the spectrometer device 112 as depicted in Figure 4A assumes an asymmetric arrangement 200.

In addition, a transfer device (not depicted here) which may, in particular, be an optical lens, a curved mirror, a grating, or a diffractive optical element, may be arranged between the inversely-operated optical concentrator device 124 and the length linearly variable filter 118. Preferably, the optical lens may, especially, be selected from a group consisting of a biconvex lens, a plano-convex lens, a biconcave lens, a plano-concave lens, an aspherical lens, a cylindrical lens and a meniscus lens. However, other kinds of transfer devices may also be feasible.

Accordingly, a symmetry axis 202 of the optical element 122 which is provided in accordance with the present invention in form of the optical concentrator device 124 arranged in reverse direction 126 and having the single rounded reflective sidewall 128 is tilted by an angle $\alpha$ with respect to the optical axis 164 of the spectrometer device 112 which is, as indicated above, parallel to the plane which is perpendicular to the receiving surface 136 of the linearly variable filter 118. Herein, the angle $\alpha$ is chosen in view of the incident light 114 which is transferred to the linearly variable filter 118 not only impinging the linearly variable filter 118 perpendicular to the receiving surface 136 of the linearly variable filter 118 on a spatial position 138 of the linearly variable filter 118 which is designed for receiving a wavelength of the incident light 118 but, in addition, also impinging a further spatial position 138' on the linearly variable filter 118 which is designed for receiving a further wavelength which exceeds the wavelength of the incident light 114.

Therefore, the light beam 186 may pass the linearly variable filter 118 at a longer wavelength compared to its inherent wavelength but due to the relative arrangement between the linearly variable filter 118 and the detector array 120, which is separated here by the transparent gap 146 as described elsewhere in this document in more detail, the light beam 186 may, still, impinge the particular pixelated sensor 144 which is provided for determining the intensity of the incident light at the particular wavelength of the incident light beam 114. Consequently, not only light beams 186 which impinge the linearly variable filter 118 normal to the receiving surface 136 of the linearly variable filter 118 at the spatial position 138 on the linearly variable filter 118 which is designated for this purpose but also light beams 186' which impinge the linearly variable filter 118 on the further spatial position 138' which is designated for receiving the longer wavelength compared to the wavelength of the incident light 144, still, impinge the same particular pixelated sensor 144 which is designed for receiving the particular wavelength of the incident light 114. As a result, also the light beams 186' may, thus, contribute to the electrical signals as generated by the particular individual pixelated sensor 144, whereby the efficiency of the spectrometer device 112 can further be increased.

As schematically shown in Figure 4B, the asymmetric arrangement 200 of the optical element 122 within the spectrometer device 112 as depicted in Figure 4A may provide additional advantages. As illustrated herein, each of three different light beams 186, 186', 186" having three different wavelengths may generate a detector signal 204, 204', 204" in the corresponding pixelated sensor 144 of the detector array 120 having, within a defined tolerance level, the same intensity irrespective of their wavelength. This advantage may even be achieved when using an incandescent lamp 156 as the illumination source 158 which can be considered as a thermal emitter within the IR spectral range and, therefore exhibits an emission power which decreases with increasing wavelength. However, this effect may be outweighed by the asymmetric arrangement 200 of the optical element 122, wherein a longer path for the light beam 186 having the shorter wavelength compared to a light beam 186" having the longer wavelength may be provided.

In addition, further effects which may influence the intensity of the light beam 186, 186', 186" at the pixelated sensor 144 may be outweighed in this manner. Especially, known IR absorption materials exhibit a tendency of increased absorption with increasing wavelength. Further, since a bandpass width of the linearly variable filter 118 typically, assumes a constant value, such as 1%, over the spectral range of the linearly variable filter 118, the resolution of the linearly variable filter 118 being inversely proportional to the bandpass width, also decreases with increasing wavelength. Further, the resolution of the linearly variable filter 118, in general, depends on the center wavelength of the linearly variable filter. However, the asymmetric arrangement 200 of the optical element 122 may facilitate the spectrometer device 112 to be more receptive for longer wavelengths while the higher emission power of the incandescent lamp 158 and the lower bandpass width at shorter wavelengths may result in an efficiency of the spectrometer device 112 being more equally distributed over its wavelength range.

The efficiency of the spectrometer device 112 can even further be increased since the single rounded sidewall 128 of the inversely-operated optical concentrator device is designed as a single reflective sidewall. As schematically shown in Figure 4B, the single reflective sidewall 128 may allow additional light beams 186* to be guided, by reflection on the single reflective sidewall, to the linearly variable filter 118 and, subsequently, to the detector array 120 where they, may, in addition, contribute to the detector signal.

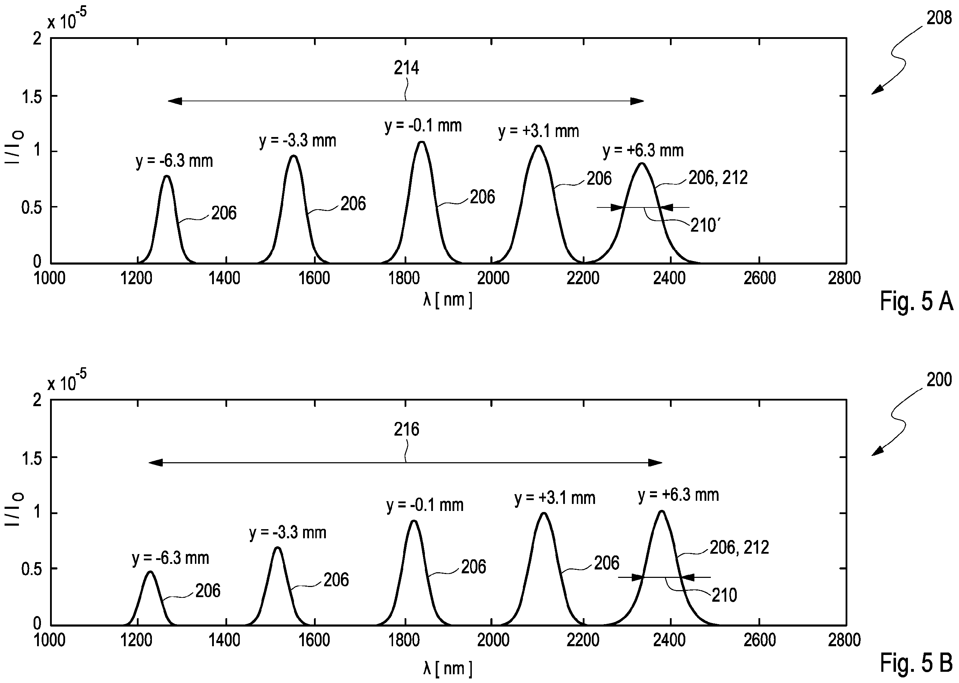

Figures 5A and 5B each schematically show a variation of a transmission rate, which can be defined by a relative intensity $I/I_0$ of transmission peaks 206, as a function of a wavelength $\lambda$ [nm] of the corresponding transmission peak 206 after transmission of the incident light 114 through the linearly variable filter 118 of the spectrometer device 112 as determined by a respective simulation. Herein, a symmetric arrangement 208 of the optical concentrator device 124 with respect to the optical axis 164 of the spectrometer device 112 as, for example, depicted in Figures 1, 2A and 2B, has been chosen for determining the transmission peaks 206 of Figure 5A whereas the asymmetric arrangement 200 of the optical concentrator device 124 as shown in Figures 4A and 4B has been used for obtaining the transmission peaks 206 as displayed in Figure 5B.

As a result of the asymmetric arrangement 200 of the optical concentrator device 124, a shift of the maximum of the relative intensity $I/I_0$ of the transmission peaks 206 and of the focus of their angle $\alpha$ towards longer wavelengths can be observed. In addition, the transmission peaks 206 appear to have a smaller peak width 210, in particular, a smaller peak width 210 at half-height, in the asymmetric arrangement 200 of Figure 5B compared to the peak width 210' at half-height in the symmetric arrangement 208 of Figure 5A, thus, resulting in a reduction of the bandpass width in the asymmetric arrangement 200. By way of example, the peak width 210 at half-height and, therefore, the bandpass width can be reduced by approx. 5 % for the transmission peak 212 having the longest wavelength. Further, the spectrum which can completely be acquired with the respective spectrometer device 112 can, thus, be estimated to slightly increase from a first spectral range 214 of 1270 nm to 2340 nm in the symmetric arrangement 208 as used for Figure 5A to a second range 216 of 1230 nm to 2390 nm in the asymmetric arrangement 200 as used for Figure 5B.

Summarizing, the transmission rate stronger increases towards longer wavelengths and, also, stronger decreases towards smaller wavelengths in the asymmetric arrangement 208 compared to the asymmetric arrangement 200 of the optical concentrator device 124, thus, facilitating the spectrometer device 112 to exhibit a higher reception for longer wavelengths. However, as indicated above, this effect can easily be outweighed by using an incandescent lamp 158 having a higher emission power whereby, eventually, a spectrometer device 112 having an efficiency which may be more equally distributed over its wavelength range may be provided in this manner.

List of reference numbers

**[0091]**

| | |
|---|---|
| 110 | spectrometer system |
| 112 | spectrometer device |
| 114 | incident light |
| 116 | object |
| 118 | linearly variable filter as a preferred example of a length variable filter |
| 120 | detector array |
| 122 | optical element |
| 124 | inversely-operated optical concentrator device |
| 126 | reverse direction |
| 128 | single rounded sidewall |
| 130 | input |
| 132 | guiding structure |
| 134 | output |
| 136 | receiving surface |
| 138, 138' | spatial position |
| 140 | response coating |
| 142 | transparent substrate |
| 144 | pixelated sensor |
| 146 | transparent gap |
| 148 | signal lead |
| 150 | evaluation unit |
| 152 | signal evaluation unit |
| 154 | illumination source |
| 156 | incandescent lamp |
| 158 | illumination control unit |
| 160 | data processing device |
| 162 | housing |
| 164 | optical axis |
| 166 | compound parabolic concentrator |
| 168 | parabolic shape |
| 170 | compound elliptical concentrator |
| 172 | elliptical shape |
| 174 | hollow body |
| 176 | shell surface |
| 178 | entrance aperture |
| 180 | entrance pupil |
| 182 | exit aperture |
| 184 | exit pupil |
| 186, 186', 186", 186* | light beam |
| 200 | asymmetric arrangement |
| 202 | symmetry axis |
| 204, 204, 204" | detector signal |
| 206 | transmission peak |
| 208 | symmetric arrangement |
| 210, 210' | peak width (at half-height) |
| 212 | transmission peak having the longest wavelength |
| 214 | first spectral range |
| 216 | second spectral range |

**Claims**

1. A spectrometer device (112), comprising:

   - an optical element (122) designed for receiving incident light (114) from an object (116) and transferring the incident light (114) to a length variable filter (118), wherein the optical element (122) comprises an optical concentrator device (124), wherein the optical concentrator device (124) is operated in reverse direction (126), wherein the optical concentrator device (124) is adapted for reflecting incident light;
   - the length variable filter (118) which is designated for separating the incident light (114) into a spectrum of constituent wavelength signals, wherein the length variable filter (118) is an optical filter comprising a plurality of interference filters provided in a continuous arrangement; and
   - a detector array (120) comprising a plurality of pixelated sensors (144), wherein each of the pixelated sensors (144) is adapted to receive at least a portion of one of the constituent wavelength signals, wherein each of the constituent wavelength signals is related to an intensity of each constituent wavelength,

   **characterized in**
   **that** the optical concentrator device (124) has a single sidewall (128), wherein the single sidewall (128) is designed as a rounded sidewall with a shape which is devoid of any corners wherein the single rounded sidewall (128) constitutes a shell surface (176) which is adapted to connect an entrance aperture (178) at the entrance pupil (180) and an exit aperture (182) at the exit pupil (184) as the optically guiding structure (132).

2. The device (112) according to the preceding claim, wherein the optical concentrator device (124) operated in reverse direction (126) comprises an entrance pupil (180) at an input (130) and an exit pupil (184) at an exit (134), wherein an optically guiding structure (132) is located between the input (130) and the output (132).

3. The device (112) according to the preceding claim, wherein the entrance pupil (180) comprises an input angle of less than 90°, and wherein the exit pupil (184) comprises an output angle of not more than 30°.

4. The device (112) according to any one of the preceding claims, wherein the optical concentrator device (124) operated in reverse direction (126) has a round entrance aperture (178) at the entrance pupil (180) and an elongated and rounded exit aperture (182) at the exit pupil (184).

5. The device (112) according to any one of the preceding claims, wherein the optical concentrator device (124) comprises one of a conical shape or a non-conical shape.

6. The device (112) according to the preceding claim, wherein the non-conical shape of the optical concentrator device (124) comprises a shape selected from a parabolic shape (168) or an elliptical shape (182).

7. The device (112) according to any one of the preceding claims, wherein the optical concentrator device (124) is arranged in an asymmetric manner with respect to the length variable filter (118),

8. The device (112) according to the preceding claim, wherein the optical concentrator device (124) is tilted with respect to a plane which is perpendicular to a receiving surface (136) of the length variable filter (118).

9. The device (112) according to any one of the preceding claims, wherein the detector array (120) is separated from the length variable filter (118) by a transparent gap (146).

10. The device (112) according to any one of the preceding claims, further comprising an illumination source (154) adapted for illuminating the object (116).

11. The device (112) according to the preceding claim, wherein the illumination source (154) comprises an incandescent lamp (156).

12. A spectrometer system (110), comprising

    - a spectrometer device (112) according to any one of the preceding claims; and
    - an evaluation unit (150) designated for determining information related to a spectrum of an object (116) by evaluating detector signals (204, 204', 204") provided by the spectrometer device (112).

**13.** The system (110) according to the preceding claim, further comprising an illumination source (154) adapted for illuminating the object (116).

**14.** The use of a spectrometer device (112) according to any one of the preceding claims referring to a spectrometer device (112) or of a spectrometer system (110) according to any one of the preceding claims referring to a spectrometer system (110), for a purpose of use, selected from the group consisting of: an infrared detection application; a heat-detection application; a thermometer application; a heat-seeking application; a flame-detection application; a fire-detection application; a smoke-detection application; a temperature sensing application; a spectroscopy application; an exhaust gas monitoring application; a combustion process monitoring application; a pollution monitoring application; an industrial process monitoring application; a chemical process monitoring application; a food processing process monitoring application; a water quality monitoring application; an air quality monitoring application; a quality control application; a temperature control application; a motion control application; an exhaust control application; a gas sensing application; a gas analytics application; a motion sensing application; a chemical sensing application.

**Patentansprüche**

**1.** Spektrometervorrichtung (112), die Folgendes umfasst:

- ein optisches Element (122), das zum Empfangen von einfallendem Licht (114) von einem Objekt (116) und zum Übertragen des einfallenden Lichts (114) zu einem längenvariablen Filter (118) ausgebildet ist, wobei das optische Element (122) eine optische Konzentratorvorrichtung (124) umfasst, wobei die optische Konzentratorvorrichtung (124) in umgekehrter Richtung (126) betrieben wird, wobei die optische Konzentratorvorrichtung (124) zum Reflektieren von einfallendem Licht ausgebildet ist;
- das längenvariable Filter (118), das zum Trennen des einfallenden Lichts (114) in ein Spektrum von konstituierenden Wellenlängensignalen vorgesehen ist, wobei das längenvariable Filter (118) ein optisches Filter ist, das eine Vielzahl von Interferenzfiltern umfasst, die in einer kontinuierlichen Anordnung vorgesehen sind; und
- ein Detektorarray (120), das eine Vielzahl von pixellierten Sensoren (144) umfasst, wobei jeder der pixellierten Sensoren (144) angepasst ist, mindestens einen Abschnitt von einem der konstituierenden Wellenlängensignale zu empfangen, wobei jedes der konstituierenden Wellenlängensignale eine Intensität von jeder konstituierenden Wellenlänge betrifft,

**dadurch gekennzeichnet, dass** die optische Konzentratorvorrichtung (124) eine einzige Seitenwand (128) aufweist, wobei die einzige Seitenwand (128) als eine abgerundete Seitenwand mit einer Form, die keine Ecken aufweist, ausgebildet ist, wobei die einzige abgerundete Seitenwand (128) eine Mantelfläche (176) bildet, die angepasst ist, um eine Eintrittsöffnung (178) an der Eintrittspupille (180) und eine Austrittsöffnung (182) an der Austrittspupille (184) als die optisch führende Struktur (132) zu verbinden.

**2.** Vorrichtung (112) nach dem vorhergehenden Anspruch, wobei die in umgekehrter Richtung (126) betriebene optische Konzentratorvorrichtung (124) eine Eintrittspupille (180) an einem Eingang (130) und eine Austrittspupille (184) an einem Ausgang (134) aufweist, wobei sich zwischen dem Eingang (130) und dem Ausgang (132) eine optisch leitende Struktur (132) befindet.

**3.** Vorrichtung (112) nach dem vorhergehenden Anspruch, wobei die Eintrittspupille (180) einen Eingangswinkel von weniger als 90° aufweist und wobei die Austrittspupille (184) einen Ausgangswinkel von nicht mehr als 30° aufweist.

**4.** Vorrichtung (112) nach einem der vorhergehenden Ansprüche, wobei die in umgekehrter Richtung (126) betriebene optische Konzentratorvorrichtung (124) eine runde Eintrittsöffnung (178) an der Eintrittspupille (180) und eine längliche und abgerundete Austrittsöffnung (182) an der Austrittspupille (184) aufweist.

**5.** Vorrichtung (112) nach einem der vorhergehenden Ansprüche, wobei die optische Konzentratorvorrichtung (124) entweder eine konische Form oder eine nicht-konische Form aufweist.

**6.** Vorrichtung (112) nach dem vorhergehenden Anspruch, wobei die nicht-konische Form der optischen Konzentratorvorrichtung (124) eine Form umfasst, die aus einer parabolischen Form (168) oder einer elliptischen Form (182) ausgewählt ist.

7. Vorrichtung (112) nach einem der vorhergehenden Ansprüche, wobei die optische Konzentratorvorrichtung (124) asymmetrisch zum längenvariablen Filter (118) angeordnet ist,

8. Vorrichtung (112) nach dem vorhergehenden Anspruch, wobei die optische Konzentratorvorrichtung (124) in Bezug auf eine Ebene geneigt ist, die senkrecht zu einer Empfangsfläche (136) des längenvariablen Filters (118) liegt.

9. Vorrichtung (112) nach einem der vorhergehenden Ansprüche, wobei die Detektoranordnung (120) durch einen transparenten Spalt (146) von dem längenvariablen Filter (118) getrennt ist.

10. Vorrichtung (112) nach einem der vorhergehenden Ansprüche, ferner umfassend eine Beleuchtungsquelle (154), die geeignet ist, das Objekt (116) zu beleuchten.

11. Vorrichtung (112) nach dem vorhergehenden Anspruch, wobei die Beleuchtungsquelle (154) eine Glühlampe (156) umfasst.

12. Spektrometersystem (110), das Folgendes umfasst

- eine Spektrometervorrichtung (112) nach einem der vorhergehenden Ansprüche; und
- eine Beurteilungseinheit (150), die zum Bestimmen von Informationen, die ein Spektrum eines Objekts (116) betreffen, durch Beurteilen von Detektorsignalen (204, 204', 204"), die von der Spektrometervorrichtung (112) bereitgestellt werden, konzipiert ist.

13. System (110) nach dem vorhergehenden Anspruch, das ferner eine Beleuchtungsquelle (154) umfasst, die zum Beleuchten des Objekts (116) angepasst ist.

14. Verwendung einer Spektrometervorrichtung (112) nach einem der vorhergehenden Ansprüche, die auf eine Spektrometervorrichtung (112) verweisen, oder eines Spektrometersystems (110) nach einem der vorhergehenden Ansprüche, die auf ein Spektrometersystem (110) verweisen, zu einem Verwendungszweck, der aus der Gruppe ausgewählt ist, die aus Folgendem besteht: einer Infrarotdetektionsanwendung; einer Wärmedetektionsanwendung; einer Thermometeranwendung; einer Wärmesuchanwendung; einer Flammendetektionsanwendung; einer Feuerdetektionsanwendung; einer Rauchdetektionsanwendung; einer Temperaturerfassungsanwendung; einer Spektroskopieanwendung; einer Abgasüberwachungsanwendung; einer Verbrennungsprozessüberwachungsanwendung; einer Verschmutzungsüberwachungsanwendung; einer Industrieprozessüberwachungsanwendung; einer chemischen Prozessüberwachungsanwendung; einer Lebensmittelverarbeitungsprozessüberwachungsanwendung; einer Wasserqualitätsüberwachungsanwendung; einer Luftqualitätsüberwachungsanwendung; einer Qualitätssteuerungsanwendung; einer Temperatursteuerungsanwendung; einer Bewegungssteuerungsanwendung; einer Abgassteuerungsanwendung; einer Gaserfassungsanwendung; einer Gasanalyseanwendung; einer Bewegungserfassungsanwendung; einer chemischen Erfassungsanwendung.

**Revendications**

1. Dispositif spectrométrique (112), comprenant :

- un élément optique (122) conçu pour recevoir la lumière incidente (114) d'un objet (116) et transférer la lumière incidente (114) à un filtre de longueur variable (118), l'élément optique (122) comprenant un dispositif concentrateur optique (124), le dispositif concentrateur optique (124) étant actionné en sens inverse (126), le dispositif concentrateur optique (124) étant adapté à la réflexion de la lumière incidente ;
- le filtre de longueur variable (118) qui est destiné à séparer la lumière incidente (114) en un spectre de signaux de longueur d'onde constitutives, le filtre de longueur variable (118) étant un filtre optique comprenant une pluralité de filtres d'interférence disposés en continu ; et
- un réseau de détecteurs (120) comprenant une pluralité de capteurs pixellisés (144), chacun des capteurs pixellisés (144) étant adapté pour recevoir au moins une partie de l'un des signaux de longueur d'onde constitutives, chacun des signaux de longueur d'onde constitutives étant lié à une intensité de chaque longueur d'onde constitutive,

**caractérisé en ce que** le dispositif concentrateur optique (124) a une paroi latérale unique (128), la paroi latérale unique (128) étant conçue comme une paroi latérale arrondie avec une forme qui est dépourvue de tout coin, la paroi latérale arrondie unique (128) constituant une surface d'enveloppe (176) qui est adaptée pour relier une ouverture d'entrée (178) à la pupille d'entrée (180) et une ouverture de sortie (182) à la pupille de sortie (184) en tant que structure de guidage optique (132).

2. Dispositif (112) selon la revendication précédente, le dispositif concentrateur optique (124) actionné en sens inverse (126) comprenant une pupille d'entrée (180) au niveau d'une entrée (130) et une pupille de sortie (184) au niveau d'une sortie (134), une structure de guidage optique (132) étant située entre l'entrée (130) et la sortie (132).

3. Dispositif (112) selon la revendication précédente, la pupille d'entrée (180) comprenant un angle d'entrée inférieur à 90°, et la pupille de sortie (184) comprenant un angle de sortie inférieur ou égal à 30°.

4. Dispositif (112) selon l'une quelconque des revendications précédentes, le dispositif concentrateur optique (124) actionné en sens inverse (126) ayant une ouverture d'entrée ronde (178) au niveau de la pupille d'entrée (180) et une ouverture de sortie allongée et arrondie (182) au niveau de la pupille de sortie (184).

5. Dispositif (112) selon l'une quelconque des revendications précédentes, le dispositif concentrateur optique (124) comprenant l'une des formes suivantes : une forme conique ou une forme non conique.

6. Dispositif (112) selon la revendication précédente, la forme non conique du dispositif concentrateur optique (124) comprenant une forme choisie parmi une forme parabolique (168) ou une forme elliptique (182).

7. Dispositif (112) selon l'une quelconque des revendications précédentes, le dispositif concentrateur optique (124) étant agencé de manière asymétrique par rapport au filtre de longueur variable (118).

8. Dispositif (112) selon la revendication précédente, le dispositif concentrateur optique (124) étant incliné par rapport à un plan qui est perpendiculaire à une surface de réception (136) du filtre de longueur variable (118) .

9. Dispositif (112) selon l'une quelconque des revendications précédentes, le réseau de détecteurs (120) étant séparé du filtre variable sur la longueur (118) par un espace transparent (146).

10. Dispositif (112) selon l'une quelconque des revendications précédentes, comprenant en outre une source d'éclairage (154) adaptée pour éclairer l'objet (116) .

11. Dispositif (112) selon la revendication précédente, la source d'éclairage (154) comprenant une lampe à incandescence (156).

12. Système spectrométrique (110), comprenant

- un dispositif spectrométrique (112) selon l'une quelconque des revendications précédentes ; et
- une unité d'évaluation (150) dédiée à la détermination d'informations relatives à un spectre d'un objet (116) en évaluant des signaux de détecteur (204, 204', 204") fournis par le dispositif spectrométrique (112) .

13. Système (110) selon la revendication précédente, comprenant en outre une source d'éclairage (154) adaptée pour éclairer l'objet (116).

14. Utilisation d'un dispositif spectrométrique (112) selon l'une quelconque des revendications précédentes se rapportant à un dispositif spectrométrique (112) ou à un système spectromètre (110) selon l'une quelconque des revendications précédentes se rapportant à un système spectromètre (110), pour une finalité d'utilisation, choisie dans le groupe constitué par : une application de détection infrarouge ; une application de détection de chaleur ; une application de thermomètre ; une application de recherche de chaleur ; une application de détection de flamme ; une application de détection d'incendie ; une application de détection de fumée ; une application de détection de température ; une application de spectroscopie ; une application de surveillance des gaz d'échappement ; une application de surveillance des processus de combustion ; une application de surveillance de la pollution ; une application de surveillance de processus industriels ; une application de surveillance de processus chimiques ; une application de surveillance de processus alimentaires ; une application de surveillance de la qualité de l'eau ; une application de surveillance de la qualité de l'air ; une application de contrôle de qualité ; une application de contrôle de température ; une application de contrôle de mouvement ; une application de contrôle de gaz d'échappement ; une application de détection des gaz ; une application d'analyse des gaz ; une application de détection de mouvement ; une application de détection de produits chimiques.

Fig. 1

126

114    130    122, 124, 166

186

128, 168, 174

164

134

Fig. 2 A

126

114    130    122, 124, 170

186

128, 172, 174

164

134

Fig. 2 B

Fig. 3

Fig. 4 A

Fig. 4 B

Fig. 5 A

Fig. 5 B

EP 3 724 620 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014131578 A1
- US 5615673 A
- US 2016151009 A1
- WO 2012110924 A1
- WO 2014097181 A1
- WO 2016120392 A1
- WO 2014198625 A1

**Non-patent literature cited in the description**

- **S. MADALA ; R.F. BOEHM.** Effect of reflection losses on stationary dielectric-filled non-imaging concentrators. *J. Photonics for Energy,* 2016, vol. 6 (4), 047002
- **LUN J. ; R. WINSTON.** Asymmetric design for compound elliptical concentrators (CEC) and its geometric flux implications. *Proc. of SPIE,* 2015, vol. 9572
- **MORTON HAMERMESH.** Group Theory and its application to physical problems,. Dover Publications, 1989, 32-67